# EUROPEAN PATENT APPLICATION

(11) **EP 1 428 716 A2**
(43) Date of publication of application: **16.06.2004**
(21) Application number: 03028434.3
(22) Date of filing: 11.12.2003
(51) Int. Cl.: B60K 41/02

(54) **Output control apparatus of internal combustion engine and clutch control device**

(30) Priority: 27.12.2002 JP 2002378993; 12.12.2002 JP 2002361054
(71) Applicant: TOYOTA JIDOSHA KABUSHIKI KAISHA, Aichi-ken 471-8571 (JP)
(72) Inventor: Inoue, Takashi, Toyota-shi, Aichi-ken, 471-8571 (JP); Otsubo, Hideaki, Toyota-shi, Aichi-ken, 471-8571 (JP); Watanabe, Hideo, Toyota-shi, Aichi-ken, 471-8571 (JP)
(74) Representative: Leson, Thomas Johannes Alois, Dipl.-Ing.

(57) **Abstract**

An output control apparatus of an internal combustion engine (11) is provided in a vehicle (1) including a clutch (13) that permits and inhibits transmission of torque from the engine to a transmission (12) and an actuator (13a) for engaging the clutch when a driver's request for starting or creeping of the vehicle is detected. The apparatus controls the output torque of the engine so that the engine speed is kept lower than a permissible upper limit value and is kept equal to or higher than a permissible lower limit value over a predetermined period during engagement of the clutch. A clutch control device is also provided which determines an operation amount of the clutch based on clutch torque calculated based on the engine speed. The device includes a map that defines the relationship between the engine speed and the clutch torque, such that the clutch torque shifts from a torque region associated with a creeping operation of the vehicle to a torque region associated with a starting operation of the vehicle as the engine speed increases.

## Description

The invention relates to an output control apparatus of an internal combustion engine for controlling the output torque of the engine in a vehicle equipped with an automatic clutch. The invention also relates to a clutch control device for changing an engaging condition of the clutch.

As well known in the art, automatic clutches adapted to be automatically engaged and released are in actual use in vehicles equipped with manual transmissions. An example of such automatic clutches is disclosed in JP-A-11-508350 (WO 97/40284).

In the vehicle including the automatic clutch, when a request to drive the vehicle through a starting operation or a creeping operation is detected, an actuator for the clutch is operated in accordance with the operating conditions of the vehicle. Through the operation of the actuator, the clutch is engaged so that torque is transmitted from the engine to the transmission.

In the vehicle equipped with the automatic clutch, when the clutch is engaged in accordance with the starting operation or creeping operation of the vehicle, the service life of the clutch may be reduced or stalling of the engine may take place, depending upon the manner of engaging the clutch.

Also, the vehicle is desired to exhibit favorable behavior or movements during the starting operation or creeping operation that involves the clutch engaging operation.

In the meantime, clutch control devices for automatically engaging and releasing clutches in vehicles equipped with manual transmissions are in actual use. An example of such clutch control devices is disclosed in the above-identified publication (JP-A-11-508350).

The clutch control device disclosed in this publication is adapted to calculate an operation amount of a clutch in the following manner when a request to drive the vehicle through a creeping operation or a starting operation is detected. Namely, a final clutch operation amount is calculated based on clutch operation amounts respectively calculated according to a computing algorithm for calculating a clutch operation amount during a creeping operation of the vehicle and a computing algorithm for calculating a clutch operation amount during a starting operation of the vehicle.

The clutch control device then operates an actuator for a clutch in accordance with the calculated clutch operation amount, to thereby change the engaging condition of the clutch. In this manner, appropriately controlled torque is transmitted from the engine to the manual transmission so that the vehicle exhibits desired behavior that meets with a request from the driver.

In the clutch control device as disclosed in the above-identified publication, the final clutch operation amount is calculated based on the calculation results obtained from the two computing algorithms as described above, and thus a complicated computing algorithm is required for calculating the final clutch operation amount.

It is therefore a first object of the invention to provide an output control apparatus of an internal combustion engine, which permits desirable engagement of a clutch by means of an actuator. It is a second object of the invention to provide an output control apparatus of an internal combustion engine, which enables the vehicle to perform desirable starting operation and creeping operation. It is a third object of the invention to provide a clutch control device that is able to calculate a clutch operation amount according to a simple computing algorithm.

To accomplish one or more of the above and other objects, there is provided according to a first aspect of the invention an output control apparatus of an internal combustion engine for controlling output torque of the engine in response to an output request from a driver, for use in a vehicle including a clutch that permits and inhibits transmission of torque from the engine to a transmission and an actuator operable to engage the clutch when a request of the driver for starting or creeping of the vehicle is detected, characterized in that output control means is provided for controlling the output torque of the engine so that the speed of revolution of the engine is kept lower than a permissible upper limit value over a predetermined period during engagement of the clutch.

During engagement of the clutch through an operation of the actuator, the output control apparatus according to the first aspect of the invention performs a process of controlling the output torque of the engine over a predetermined period so that the speed of revolution of the engine is kept lower than the permissible upper limit value. In the case where engagement of the clutch is effected in response to a request of the driver for starting or creeping of the vehicle, the following problem may occur: when the clutch is engaged while the engine speed is excessively high, the service life of the clutch may be reduced. In view of this problem, the output control apparatus is arranged to control the output torque of the engine in the above-described manner so as to protect the clutch. With this arrangement, the clutch can be engaged in a favorable manner by means of the actuator.

According to a second aspect of the invention, there is provided an output control apparatus of an internal combustion engine for controlling output torque of the engine in response to an output request from a driver, for use in a vehicle including a clutch that permits and inhibits transmission of torque from the engine to a transmission and an actuator operable to engage the clutch when a request of the driver for starting or creeping of the vehicle is detected, characterized in that output control means is provided for controlling the output torque of the engine so that the speed of revolution of the engine is kept equal to or higher than a permissible lower limit value over a predetermined period during engagement of the clutch.

During engagement of the clutch through an operation of the actuator, the output control apparatus according to the second aspect of the invention performs a process of controlling the output torque of the engine over a predetermined period so that the speed of revolution of the engine is kept equal to or higher than the permissible lower limit value. In the case where engagement of the clutch is effected in response to a request of the driver for starting or creeping of the vehicle, the following problem may occur: when the clutch is engaged while the engine speed is excessively low, stalling of the engine may be induced. In view of this problem, the output control apparatus is arranged to control the output torque of the engine in the above-described manner so as to favorably avoid stalling of the engine. With this arrangement, the clutch can be engaged in a favorable manner by means of the actuator.

According to a third aspect of the invention, there is provided an output control apparatus of an internal combustion engine for controlling output torque of the engine in response to an output request from a driver, for use in a vehicle including a clutch that permits and inhibits transmission of torque from the engine to a transmission and an actuator operable to engage the clutch when a request of the driver for starting or creeping of the vehicle is detected, characterized in that output control means is provided for controlling the output torque of the engine so that the speed of revolution of the engine is kept lower than a permissible upper limit value and is kept equal to or higher than a permissible lower limit value over a predetermined period during engagement of the clutch.

During engagement of the clutch through an operation of the actuator, the output control apparatus according to the third aspect of the invention performs a process of controlling the output torque of the engine over a predetermined period so that the speed of revolution of the engine is kept lower than the permissible upper limit value and is kept equal to or higher than the permissible lower limit value. With this arrangement, the clutch can be protected, and stalling of the engine can be favorably avoided. Thus, the output control apparatus makes it possible to engage the clutch in a desirable manner by means of the actuator.

In a preferred embodiment of the first and third aspects of the invention, the above-indicated output control means makes the permissible upper limit value variable depending upon an operation amount of an accelerator pedal provided in the vehicle.

With the above arrangement, the permissible upper limit value is set to be variable depending upon the operation amount of the accelerator pedal of the vehicle. In this connection, if the permissible upper limit value is set to a fixed value, the output request of the driver (represented by the operation amount of the accelerator pedal) is not reflected by the behavior of the vehicle, resulting in deterioration of the driveability. By setting the permissible upper limit value to variable values in the manner as described above, it is possible to protect the clutch while favorably avoiding deterioration of the driveability.

In a preferred embodiment of the second and third aspects of the invention, the output control means makes the permissible lower limit value variable depending upon the speed of rotation of the transmission.

With the above arrangement, the permissible lower limit value is set to be variable depending upon the transmission speed. In this connection, if the permissible lower limit value is set to a fixed value, the engine speed may fall below the transmission speed, namely, stalling of the engine may be induced. In order to appropriately avoid stalling of the engine, it is desirable to keep the engine speed equal to or higher than the transmission speed. By setting the permissible lower limit value to variable values in the manner as described above, stalling of the engine can be favorably avoided.

In another preferred embodiment of the first through third aspects of the invention, the predetermined period over which the output control means controls the output torque of the engine extends from a start of engagement of the clutch by the actuator to completion of the engagement of the clutch.

With the above arrangement, the process of controlling the output torque of the engine is performed over the period from start of engagement of the clutch by the actuator to completion of the engagement of the clutch. Thus, the output control apparatus is able to provide the advantageous effects as described above during this period.

According to a fourth aspect of the invention, there is provided an output control apparatus of an internal combustion engine for controlling output torque of the engine in response to an output request from a driver, for use in a vehicle including a clutch that permits and inhibits transmission of torque from the engine to a transmission and an actuator operable to engage the clutch when a request of the driver for starting or creeping of the vehicle is detected, characterized in that output control means is provided for controlling the output torque of the engine so that the speed of revolution of the engine is kept lower than a permissible upper limit value over a predetermined period during a starting operation or a creeping operation of the vehicle.

When the vehicle is in a starting operation or a creeping operation, the output control apparatus according to the fourth aspect of the invention performs a process of controlling the output torque of the engine over a predetermined period so that the engine speed is kept lower than the permissible upper limit value. With this arrangement, the engine speed is prevented from being excessively increased during a starting operation and a creeping operation, and therefore the vehicle is able to perform desirable starting and creeping operations.

According to a fifth aspect of the invention, there is provided an output control apparatus of an internal combustion engine for controlling output torque of the engine in response to an output request from a driver, for use in a vehicle including a clutch that permits and inhibits transmission of torque from the engine to a transmission and an actuator operable to engage the clutch when a request of the driver for starting or creeping of the vehicle is detected, characterized in that output control means is provided for controlling the output torque of the engine so that the speed of revolution of the engine is kept equal to or higher than a permissible lower limit value over a predetermined period during a starting operation or a creeping operation of the vehicle.

When the vehicle is in a starting operation or a creeping operation, the output control apparatus according to the fifth aspect of the invention performs a process of controlling the output torque of the engine over a predetermined period so that the engine speed is kept equal to or higher than the permissible lower limit value. With this arrangement, stalling of the engine that would be otherwise induced by excessive reduction of the engine speed can be avoided during a starting operation and a creeping operation, and therefore the vehicle is able to perform desirable starting and creeping operations.

According to a sixth aspect of the invention, there is provided an output control apparatus of an internal combustion engine for controlling output torque of the engine in response to an output request from a driver, for use in a vehicle including a clutch that permits and inhibits transmission of torque from the engine to a transmission and an actuator operable to engage the clutch when a request of the driver for starting or creeping of the vehicle is detected, characterized in that output control means is provided for controlling the output torque of the engine so that the speed of revolution of the engine is kept lower than a permissible upper limit value and is kept equal to or higher than a permissible lower limit value, over a predetermined period during a starting operation or a creeping operation of the vehicle.

When the vehicle is in a starting operation or a creeping operation, the output control apparatus according to sixth aspect of the invention performs a process of controlling the output torque of the engine over a predetermined period so that the engine speed is kept lower than the permissible upper limit value and is kept equal to or higher than the permissible lower limit value. Thus, the output control apparatus of the sixth aspect of the invention provides advantageous effects similar to those provided according to the fifth and sixth aspects of the invention.

According to a seventh aspect of the invention, there is provided a clutch control device including torque calculating means for calculating torque that can be transmitted by a clutch, based on the speed of revolution of an internal combustion engine installed on a vehicle. The clutch control device is adapted to determine an operation amount of the clutch based on the torque calculated by the torque calculating means, and the torque calculating means defines a relationship between the speed of revolution of the engine and the torque that can be transmitted by the clutch, in view of torque associated with a creeping operation of the vehicle and torque associated with a starting operation of the vehicle.

The clutch control device according to the seventh aspect of the invention includes the torque calculating means in which the relationship between the speed of revolution of the engine and the torque that can be transmitted by the clutch is set in the above-described manner. When the behavior of the vehicle shifts between a starting movement and a creeping movement, these movements of the vehicle are normally reflected by the engine speed. Accordingly, the torque that can be transmitted by the clutch can be appropriately determined by using the torque calculating means as described above, without clearly determining whether the vehicle is in a creeping operation or a starting operation. Namely, the torque that can be transmitted by the clutch and is required during the creeping operation and starting operation of the vehicle can be calculated only by means of the torque calculating means. Thus, the clutch control device as described above is able to calculate the operation amount of the clutch by using a simple computing algorithm.

According to an eighth aspect of the invention, there is provided a clutch control device including torque calculating means for calculating torque that can be transmitted by a clutch, based on the speed of revolution of an internal combustion engine installed on a vehicle. The clutch control device is adapted to determine an operation amount of the clutch based on the torque calculated by the torque calculating means, and the torque calculating means defines a relationship between the speed of revolution of the engine and the torque that can be transmitted by the clutch, such that the torque that can be transmitted by the clutch shifts from a first torque region associated with a creeping operation of the vehicle to a second torque region associated with a starting operation of the vehicle as the speed of revolution of the engine increases.

The clutch control device according to the eighth aspect of the invention includes the torque calculating means in which the relationship between the speed of revolution of the engine and the torque that can be transmitted by the clutch is set in the above-described manner. With this arrangement, the clutch control device is able to provide advantageous effects similar to those as provided by the clutch control device according to the seventh aspect of the invention.

According to a ninth aspect of the invention, there is provided a clutch control device including torque calculating means for calculating torque that can be transmitted by a clutch and is required during a starting operation of a vehicle, based on the speed of revolution of an internal combustion engine installed on the vehicle. The clutch control device is adapted to determine an operation amount of the clutch based on the torque calculated by the torque calculating means, and the torque calculating means defines a relationship between the torque that can be transmitted by the clutch and the speed of revolution of the engine, such that the minimum value of the torque that can be transmitted by the clutch is set based on a torque value associated with a creeping operation of the vehicle.

The clutch control device according to the ninth aspect of the invention includes the torque calculating means in which the relationship between the speed of revolution of the engine and the torque that can be transmitted by the clutch is set in the above-described manner. With this arrangement, the clutch control device is able to provide advantageous effects similar to those as provided by the clutch control device according to the seventh aspect of the invention.

In a preferred embodiment of any one of the seventh through ninth aspects of the invention, the torque associated with the creeping operation of the vehicle is set to a constant value relative to the speed of revolution of the engine. With this arrangement, the vehicle is able to exhibit stable behavior during the creeping operation.

According to a tenth aspect of the invention, there is provided a clutch control device including torque calculating means for calculating torque that can be transmitted by a clutch and is required during a starting operation of a vehicle, based on the speed of revolution of an internal combustion engine installed on the vehicle. The clutch control device is adapted to determine an operation amount of the clutch based on the torque calculated by the torque calculating means, and the torque calculating means is provided with a region in which the torque that can be transmitted by the clutch is calculated with respect to a creeping operation of the vehicle, and defines a relationship between the speed of revolution of the engine and the torque that can be transmitted by the clutch with respect to the creeping operation as well as the starting operation.

The clutch control device according to the tenth aspect of the invention includes the torque calculating means in which the relationship between the speed of revolution of the engine and the torque that can be transmitted by the clutch is set in the above-described manner. With this arrangement, the clutch control device is able to provide advantageous effects similar to those as provided by the clutch control device according to the seventh aspect of the invention.

In a preferred embodiment of the tenth aspect of the invention, the torque that can be transmitted by the clutch during the creeping operation of the vehicle is set to a constant value relative to the speed of rotation of the engine. With this arrangement, the vehicle is able to exhibit stable behavior during the creeping operation.

The foregoing and/or further objects, features and advantages of the invention will become more apparent from the following description of preferred embodiments with reference to the accompanying drawings, in which like numerals are used to represent like elements and wherein:
FIG. 1 is a view schematically showing the construction of a system including an output control apparatus of an internal combustion engine according to a first embodiment of the invention;
FIG. 2 is a flowchart showing a request determination process executed by the output control apparatus of the first embodiment;
FIG. 3 is a flowchart showing a part of an engagement determination and output control process executed by the output control apparatus of the first embodiment;
FIG. 4 is a flowchart showing another part of an engagement determination and output control process executed by the output control apparatus of the first embodiment;
FIG. 5 is a map that defines the relationship between the accelerator operation amount and the permissible upper limit engine speed, which map is used in the output control process performed in the first embodiment;
FIG. 6 is a map that defines the relationship between the transmission speed and the permissible lower limit engine speed, which map is used in the output control process performed in the first embodiment;
FIG. 7 is a timing chart showing an example of an engagement pattern of the clutch according to the request determining process and engagement determination and output control process executed by the output control apparatus of the first embodiment;
FIG. 8 is a flowchart showing an engagement determination and output control process executed by an output control apparatus of an internal combustion engine according to a second embodiment of the invention;
FIG. 9 is a timing chart showing an example of an engagement pattern of the clutch according to the request determination process and engagement determination and output control process executed by the output control apparatus of the second embodiment;
FIG. 10 is a flowchart showing an engagement determination and output control process executed by an output control apparatus of an internal combustion engine according to a third embodiment of the invention; and
FIG. 11 is a timing chart showing an example of an engagement pattern of the clutch according to the request determination process and engagement determination and output control process executed by the output control apparatus of the third embodiment;
FIG. 12 is a flowchart showing an engagement determination and output control process executed by an output control apparatus of an internal combustion engine according to a fourth embodiment of the invention;
FIG. 13 is a view schematically showing the construction of a system including a clutch control device according to a fifth embodiment of the invention;
FIG. 14 is a flowchart showing a request determination process as a part of a clutch operation process executed by the clutch control device of the fifth embodiment;
FIG. 15 is a flowchart showing a torque calculating process as a part of the clutch operation process executed by the clutch control device of the fifth embodiment; and
FIG. 16 is a map showing the relationship between the engine speed and the clutch torque, which map is used in the torque calculating process executed in the fifth embodiment.

### First Embodiment

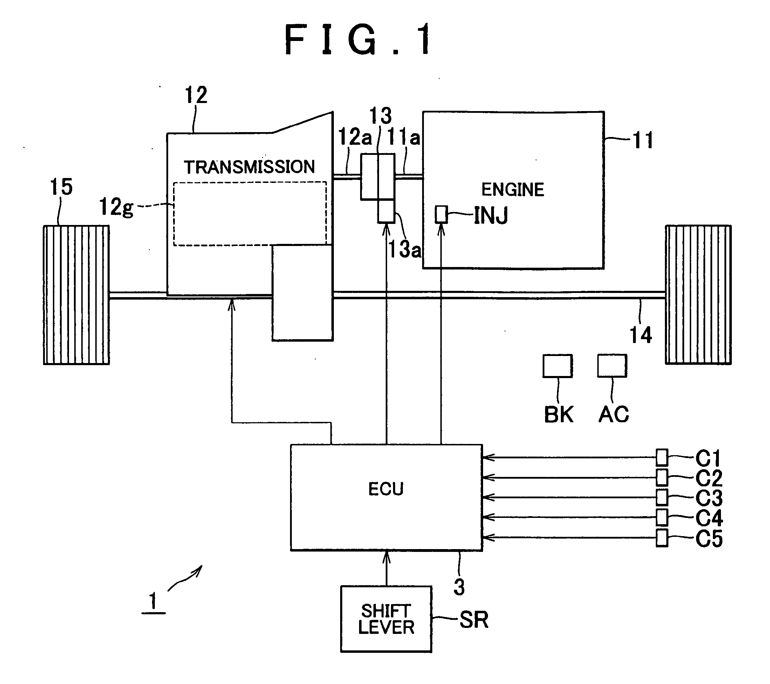

Referring to FIG. 1 through FIG. 7, an output control apparatus of an internal combustion engine according to the first embodiment of the invention will be described in detail.

Initially, a system that employs the output control apparatus of the first embodiment will be described with reference to FIG. 1. In a vehicle 1, transmission of rotation or rotary power from a crankshaft 11a as an output shaft of an internal combustion engine 11 to a transmission 12 is permitted or inhibited by a clutch 13 (automatic clutch). Namely, the crankshaft 11a and an input shaft 12a of the transmission 12 are connected to each other via the clutch 13 so that rotation of the engine 11 can be transmitted to the transmission 12.

The engine 11 includes an injector INJ for injecting and supplying fuel to the engine 11. In operation, the duration or period of injection of fuel from the injector INJ is changed so as to control the magnitude of output torque of the engine 11.

The transmission 12 includes gears 12g for reducing the speed of rotation received from the crankshaft 11a. The rotation whose speed has been reduced by the gears 12g is transmitted to a drive shaft 14, and is then transmitted to drive wheels 15 so as to drive the vehicle 1.

The clutch 13 is operated or actuated by a clutch actuator 13a so that its engaging condition is changed. Namely, the engaging condition of the clutch 13 is changed between a released condition (in which no rotation is transmitted from the crankshaft 11a to the input shaft 12a) and an engaged condition (in which no slip occurs between the crankshaft 11a and the input shaft 12a).

The clutch 13 is in the released condition when the vehicle 1 is in an idling mode, and is in the engaged condition when the vehicle 1 is in any one of a normal running mode, a starting operation and a creeping operation. When the gear ratio or speed ratio of the transmission 12 is to be changed, the clutch 13 is temporarily released.

The vehicle 1 also includes an accelerator pedal AD, a brake pedal BK and a shift lever SR, which are operated by the driver, and an electronic control unit (ECU) 3 that controls the vehicle 1 in an integrated manner.

The ECU 3 receives detection data from respective sensors as follows:
(a) detection data of an engine speed sensor C1 that detects the engine speed Ne as the speed of revolution of the engine 11 (or the speed of rotation of the crankshaft 11a),
(b) detection data of a transmission speed sensor C2 that detects the transmission speed Ni as the speed of rotation of the transmission 12 (or the speed of rotation of the input shaft 12a),
(c) detection data of an accelerator position sensor C3 that detects the operation amount of the accelerator pedal AC (or accelerator operation amount Accl),
(d) detection data of a brake sensor C4 that detects the operation amount of the brake pedal BK (or brake operation amount Brk), and
(e) detection data of a shift position sensor C5 that detects the shift position of the shift lever SR.

The ECU 3 performs the following operations, based on the detection data as indicated above.
(1) The ECU 3 changes the fuel injection duration of the injector INJ when it determines, based on the operation of the accelerator pedal AC by the driver (which represents an output request from the driver), that the output torque of the engine 11 needs to be controlled.
(2) The ECU 3 changes the gear stage (or speed ratio) of the transmission 12 when it detects a request for a change of the gear stage of the transmission 12 based on the operation of the shift lever SR by the driver.
(3) The ECU 3 engages the clutch 13 through control of the clutch actuator 13a when it detects a request for a starting operation or a creeping operation of the vehicle 1 based on the operation of the accelerator pedal AC by the driver, and the like.

In the present embodiment, a clutch control device includes the ECU 3 and the clutch actuator 13a.

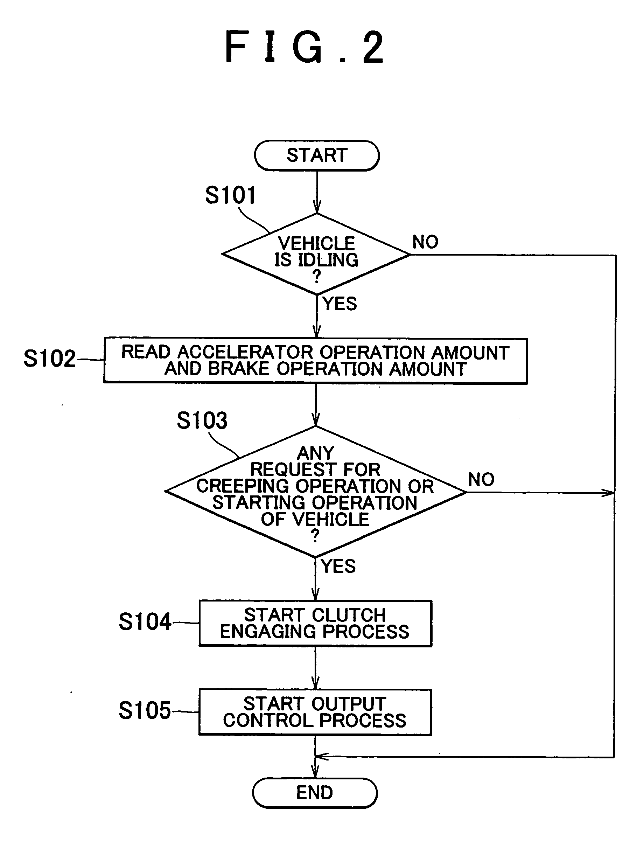

When the clutch that has been in a released condition is engaged in response to a request from the driver, the engagement may cause excessive wear of the clutch or stalling of the engine. To avoid these possibilities, the output control apparatus of the present embodiment controls the output of the engine through a process as explained below when the clutch control device operates to engage the clutch. In the following, the processes to be implemented upon engagement of the clutch will be described with reference to FIG. 2 to FIG. 6.

Referring first to FIG. 2, a request determination process for determining a request of the driver will be explained. This process is repeatedly executed at certain time intervals.

As shown in FIG. 2, it is initially determined in step S101 whether the vehicle 1 is in an idling state.

If it is determined that the vehicle 1 is in an idling state, the ECU 3 reads the detection data (i.e., the accelerator operation amount Accl and the brake operation amount Brk) from the accelerator position sensor C3 and the brake sensor C4 in step S102. The ECU 3 then determines a request from the driver in the following manners, based on the detection data thus read.
(a) If the brake operation amount Brk is equal to or larger than a predetermined value, the driver makes a request to keep the vehicle 1 stopped (or idling).
(b) If the brake operation amount Brk is smaller than the predetermined value, the driver makes a request for a starting operation or a creeping operation to drive the vehicle 1.

In the present embodiment, the subsequent process can be performed without clearly determining which one of a request for starting and a request for creeping is being made.

In step S103, the ECU 3 determines whether the driver makes either of a request for starting and a request for creeping, namely, whether the driver makes a request to drive the vehicle 1 through a starting operation or a creeping operation.

If it is determined in step S103 that the driver makes a request to drive the vehicle 1 through a starting operation or a creeping operation, the ECU 3 starts a clutch engaging process for engaging the clutch 13 in step S104. In the clutch engaging process, which is performed separately from the process of FIG. 2, the clutch actuator 13a is suitably operated based on the operating conditions of the vehicle 1, so as to complete engagement of the clutch 13. The clutch engaging process is finished upon completion of the engagement of the clutch 13.

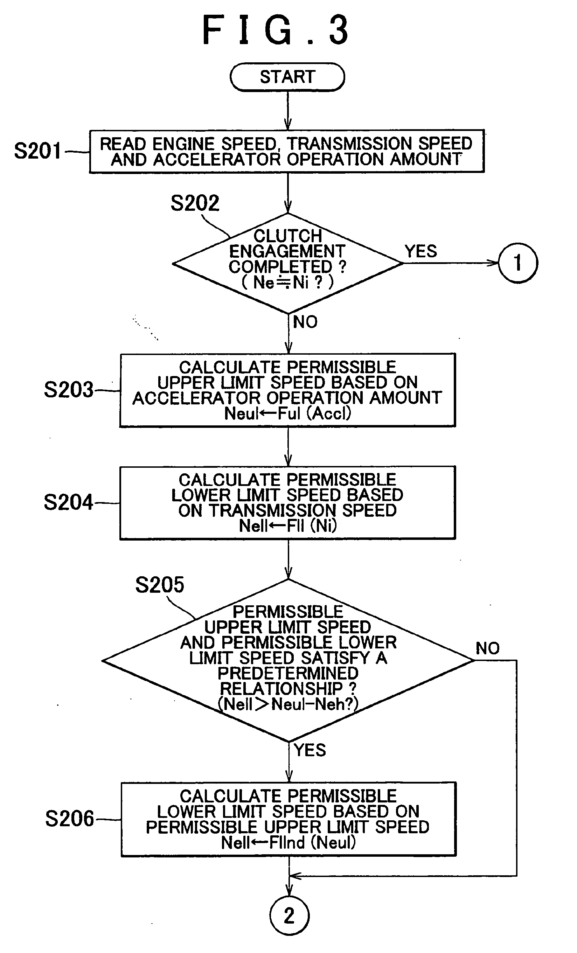

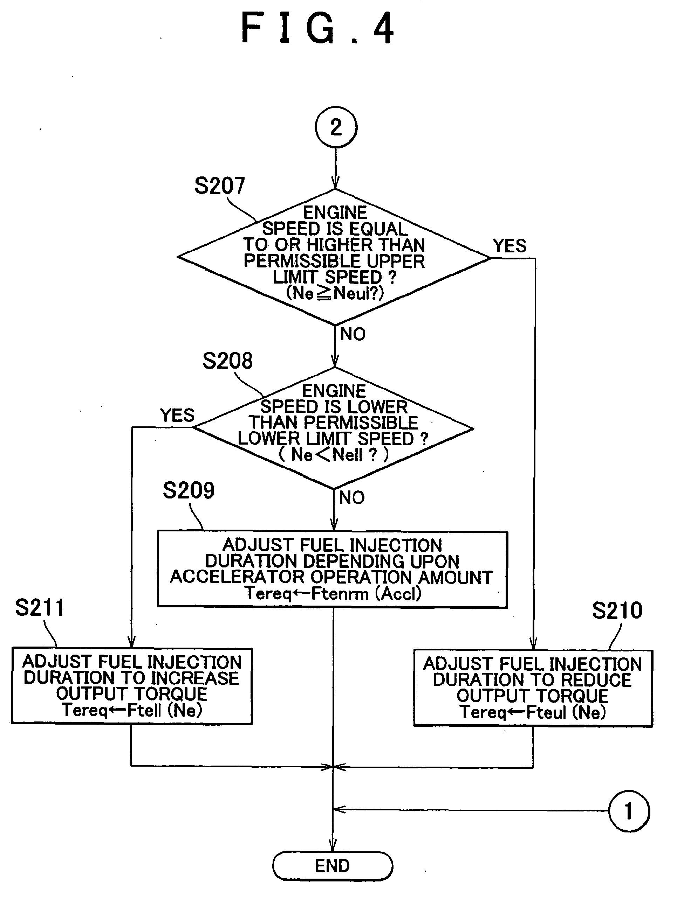

In step S105 following step S104, an engagement determination and output control process (of FIG. 3 and FIG. 4) for controlling the magnitude of the output torque of the engine 11 is started. The engagement determination and output control process will be described later.

On the other hand, if it is determined in step S101 that the vehicle 1 is not in an idling state (i.e., if a negative determination (NO) is made in step S101), or if the driver makes no request to drive the vehicle 1 through a starting operation and a creeping operation (i.e., if a negative determination (NO) is made in step S103), the process of FIG. 2 is once finished.

According to the process as described above, engagement of the clutch 13 is started when a request to drive the vehicle through a starting operation or a creeping operation is detected. Upon the start of the engagement of the clutch 13, the engagement determination and output control process is carried out.

Referring next to FIG. 3 to FIG. 6, the engagement determination and output control process will be explained. This process is repeatedly executed at certain time intervals. The process of FIG. 3 and FIG. 4 includes a process of step S201 and step S202 corresponding to the engagement determination process, and a process of step S203 through step S211 corresponding to the output control process. The output control process is equivalent to a process executed by the output control means.

As shown in FIG. 3 and FIG. 4, the ECU 3 initially reads the engine speed Ne, transmission speed Ni and the accelerator operation amount Accl in step S201. The ECU 3 then determines whether engagement of the clutch 13 is completed in step S202. The completion of engagement of the clutch 13 can be determined by, for example, determining whether the crankshaft 11a and the input shaft 12a of the transmission 12 are in a state of synchronous rotation (in which the engine speed Ne and the transmission speed Ni are substantially equal to each other). Namely, it can be determined that engagement of the clutch 13 is completed if a condition that Ne ≈ Ni is satisfied.

If it is determined in step S202 that engagement of the clutch 13 is has not been completed, the output control process as described below is carried out. If it is determined that engagement of the clutch 13 is completed, on the other hand, the process of FIG. 3 and FIG. 4 is once finished. Namely, in the present embodiment, the output control process is executed over a certain period of time from a start of engagement of the clutch 13 to completion of the engagement.

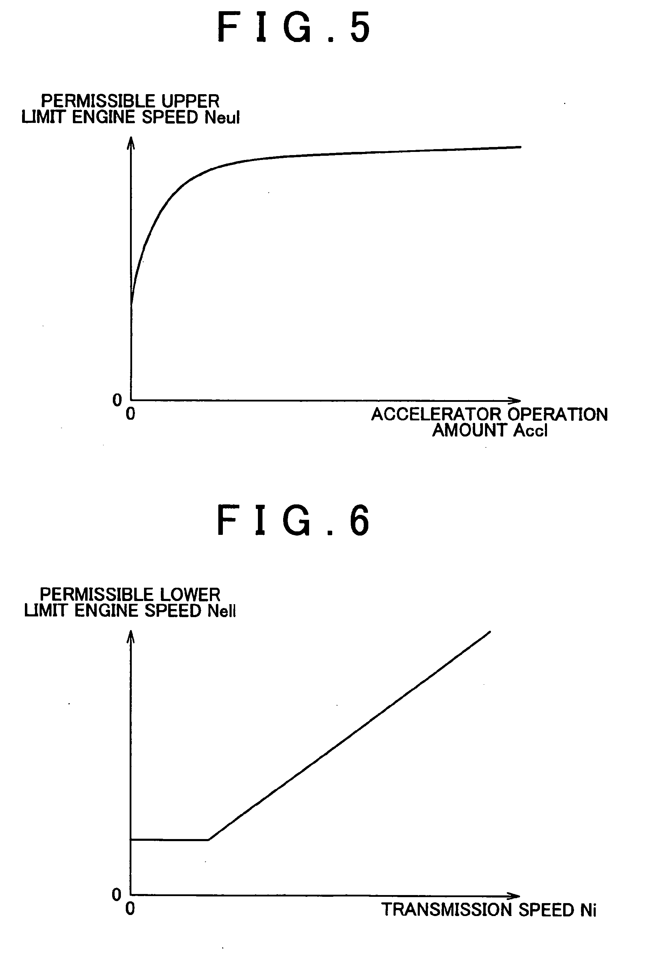

If it is determined in step S202 that engagement of the clutch 13 has not been completed, step S203 is executed to calculate the permissible upper limit engine speed Neul (permissible upper limit value) that is set as the upper limit value of the speed of revolution of the engine 11, by applying the accelerator operation amount Accl read in step S201 to a map as shown in FIG. 5.

In the map of FIG. 5, the permissible upper limit engine speed Neul is set in view of the durability of the clutch 13. Thus, the clutch13 is protected against wear, damage, or the like, when the engine speed Ne is kept lower than the permissible upper limit speed Neul.

In the map of FIG. 5, the relationship between the parameters Neul and Accl is defined such that the permissible upper limit engine speed Neul has a larger value as the accelerator operation amount Accl increases. The maximum value of the permissible upper limit engine speed Neul may be set, for example, in the following manner: the upper limit value of the engine speed Ne that is permitted within a range in which the clutch 13 can be protected is set as the maximum value of the permissible upper limit engine speed Neul.

Next, step S204 is executed to calculate the permissible lower limit engine speed Nell (permissible lower limit value) set as the lower limit value of the speed of revolution of the engine 11, by applying the transmission speed Ni read in step S201 to a map as shown in FIG. 6.

In the map of FIG. 6, the permissible lower limit engine speed Nell is set in view of stalling of the engine. By using this map, stalling of the engine is appropriately avoided when the engine speed Ne is kept equal to or higher than the permissible lower limit speed Nell.

In the map of FIG. 6, the relationship between the parameters Ni and Nell is defined such that (1) in a region where the transmission speed Ni is lower than a value corresponding to the engine speed Ne (idle speed Neid) established while the vehicle 1 is idling, the permissible lower limit engine speed Nell is set to a value equivalent to the idle speed Neid, and (2) in a region where the transmission speed Ni is equal to or higher than a value corresponding to the idle speed Neid, the permissible lower limit engine speed Nell is set to the same value as the transmission speed Ni.

Next, it is determined in step S205 whether the relationship between the permissible upper limit engine speed Neul and the permissible lower limit engine speed Nell satisfies a predetermined condition. The predetermined condition may be, for example, that when the permissible upper limit engine speed Neul involves a hysteresis characteristic when it is used as a judgment value, a value obtained by subtracting a predetermined value (a predetermined speed Neh provided for the hysteresis characteristic) from the permissible upper limit engine speed Neul is less than the permissible lower limit engine speed Nell. In other words, it is determined in step S205 whether a condition that Nell > Neul ― Neh is satisfied.

If the above condition is satisfied, the subsequent process (as shown in FIG. 4) cannot be appropriately performed based on the permissible upper limit engine speed Neul and the permissible lower limit engine speed Nell. In this case, therefore, step S206 is executed to apply the permissible upper limit engine speed Neul to a certain function Fllnd so as to calculate the permissible lower limit engine speed Nell again. Namely, an operation as expressed as Nell ← Fllnd(Neul) is performed in step S206.

If the condition indicated in step S205 is not satisfied, on the other hand, the permissible upper limit engine speed Neul and the permissible lower limit engine speed Nell calculated based on the maps of FIG. 5 and FIG. 6 are employed without being changed.

Subsequently, step S207 is executed to determine whether the engine speed Ne is equal to or higher than the permissible upper limit speed Neul. Namely, it is determined in step S207 whether a condition that Ne ≥ Neul is satisfied.

When the engine speed Ne is equal to or higher than the permissible upper limit speed Neul, the output torque of the engine 11 is reduced so that the engine speed Ne becomes lower than the permissible upper limit speed Neul in step S210. Namely, the fuel injection duration Tereq of the injector INJ is adjusted in step S210 so as to provide output torque that makes the engine speed Ne lower than the permissible upper limit speed Neul.

In this case, the fuel injection duration Tereq is calculated, based on a certain function Fteul that defines the relationship between the engine speed Ne and the fuel injection duration Tereq and is used when the output torque of the engine 11 is to be reduced. Namely, the fuel injection duration Tereq is calculated through an operation as expressed as Tereq ← Freul (Ne).

If the engine speed Ne is lower than the permissible upper limit speed Neul, on the other hand, it is determined in step S208 whether the engine speed Ne is lower than the permissible lower limit speed Nell. Namely, step S208 determines whether a condition that Ne < Nell is satisfied.

If the engine speed Ne is lower than the permissible lower limit speed Nell, the output torque of the engine 11 is increased so that the engine speed Ne becomes equal to or higher than the permissible lower limit speed Nell. Namely, in step S211, the fuel injection duration Tereq of the injector INJ is adjusted so as to provide output torque that makes the engine speed Ne equal to or higher than the permissible lower limit speed Nell.

In this case, the fuel injection duration Tereq is calculated, based on a certain function Ftell that defines the relationship between the engine speed Ne and the fuel injection duration Tereq and is used when the output torque of the engine 11 is to be increased. Namely, the fuel injection duration Tereq is calculated through an operation as expressed as Tereq ← Ftell (Ne).

If the engine speed Ne is equal to or higher than the permissible lower limit speed Nell, on the other hand, the fuel injection duration Tereq of the injector INJ is adjusted in step S209 so that the resulting output torque of the engine 11 varies depending upon the accelerator operation amount Accl.

In this case, the fuel injection duration Tereq is calculated based on a certain function Ftenrm that defines the relationship between the accelerator operation amount Accl and the fuel injection duration Tereq. Namely, the fuel injection duration Tereq is calculated through an operation as expressed as Tereq ← Ftenrm (Accl).

Through the process as described above, the output torque of the engine 10 is controlled over a period up to completion of engagement of the clutch 13 so that the speed of revolution of the engine 11 is kept lower than the permissible upper limit speed Neul set based on the accelerator operation amount Accl, and is kept equal to or higher than the permissible lower limit speed Nell set based on the transmission speed Ni.

With the above arrangement, the clutch 13 is protected and stalling of the engine is favorably avoided during engagement of the clutch 13 by the clutch control device.

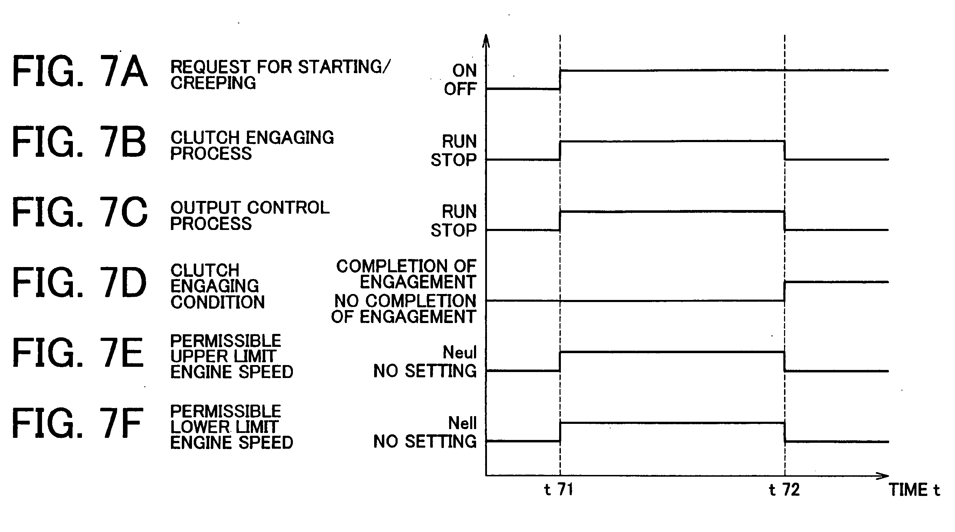

Referring next to FIG. 7, one example of an engagement pattern of the clutch 13 according to the above-described processes (of FIG. 2 to FIG. 4) will be explained.

If a request to drive the vehicle 1 through a starting operation or a creeping operation is detected at time t71, based on an operation of the accelerator pedal AC by the driver, for example, the clutch engaging process and the engagement determination and output control process are started as shown in FIG. 7A to FIG. 7C. Through the engagement determination and output control process, the permissible upper limit engine speed Neul and the permissible lower limit engine speed Nell are set as shown in FIG. 7E and FIG. 7F, and the output torque of the engine 11 is controlled based on a result of comparison between each of the upper and lower limit speeds and the engine speed Ne.

If it is determined at time t72 that engagement of the clutch 13 is completed, each of the above-described processes is stopped, and setting of the permissible upper limit engine speed Neul and the permissible lower limit engine speed Nell is cancelled, as shown in FIG. 7B through FIG. 7F.

The output control apparatus of the internal combustion engine according to the first embodiment as described above provides advantageous effects as follows.
(1) In the present embodiment, while the clutch 13 is being engaged through an operation of the clutch actuator 13a, the output torque of the engine 11 is controlled so that the engine speed Ne is kept lower than the permissible upper limit speed Neul, and is kept equal to or higher than the permissible lower limit speed Nell. It is thus possible to favorably avoid stalling of the engine 11 while assuring protection of the clutch 13.
(2) In the present embodiment, the permissible upper limit engine speed Neul is set to be variable depending upon the accelerator operation amount Accl. It is thus possible to ensure protection of the clutch 13 while suitably satisfying the output request from the driver.
(3) In the present embodiment, the relationship between the parameters (Accl, Neul) is defined so that the permissible upper limit engine speed Neul has a larger value as the accelerator operation amount Accl increases. Thus, since the engine speed Ne is kept lower than a value (Neul) that varies with the accelerator operation amount Accl, deviation of the behavior (or movements) of the vehicle 1 from that required by the operation of the accelerator pedal AC by the driver can be favorably reduced or eliminated.
(4) In the present embodiment, the permissible lower limit speed Nell is set to be variable depending upon the transmission speed Ni. Thus, stalling of the engine 11 can be more appropriately prevented.
(5) In the present embodiment, when the value obtained by subtracting the predetermined speed Neh from the permissible upper limit engine speed Neul is less than the permissible lower limit engine speed Nell, the permissible lower limit engine speed Nell is calculated again by applying the permissible upper limit engine speed Neul to the function Fllnd. With this arrangement, the relationship between the permissible upper limit engine speed Neul and the permissible lower limit engine speed Nell can be set to appropriate values, and therefore the output torque of the engine 11 can be properly controlled.

The first embodiment as described above may be changed or modified when appropriate to provide the following modified examples, which are merely exemplary.
(1) While the permissible upper limit engine speed Neul is calculated by applying the accelerator operation amount Accl to the map as shown in FIG. 5 in the first embodiment, the permissible upper limit engine speed Neul may be calculated by other methods. For example, the permissible upper limit engine speed Neul may be calculated by applying the accelerator operation amount Accl to a certain function that defines the relationship between the accelerator operation amount Accl and the permissible upper limit engine speed Neul. In this case, the function may be determined so that calculation results obtained from the function indicate a relationship similar or equivalent to the relationship between the accelerator operation amount Accl and the permissible upper limit engine speed Neul as defined in, for example, the map of FIG. 5.
(2) Although the relationship between the accelerator operation amount Accl and the permissible upper limit engine speed Neul is defined as shown in FIG. 5 in the first embodiment, the relationship between these parameters is not limited to that of the first embodiment, but may be changed when appropriate. In short, the relationship between the parameters Accl and Neul may be appropriately changed provided that the permissible upper limit engine speed Neul has a larger value as the accelerator operation amount Accl increases.
(3) While the permissible upper limit engine speed Neul is set to be variable depending upon the accelerator operation amount Accl in the first embodiment, other parameters may be used in place of the accelerator operation amount Accl.
(4) While the permissible lower limit engine speed Nell is calculated by applying the transmission speed Ni to the map as shown in FIG. 6 in the first embodiment, the permissible lower limit engine speed Nell may be calculated by other methods. For example, the permissible lower limit speed Nell may be calculated by applying the transmission speed Ni to a certain function that defines the relationship between the transmission speed Ni and the permissible lower limit engine speed Nell. In this case, the function may be determined so that calculation results obtained from the function indicate a relationship similar to or equivalent to the relationship between the transmission speed Ni and the permissible lower limit engine speed Nell as defined in, for example, the map of FIG. 6.
(5) Although the relationship between the transmission speed Ni and the permissible lower limit engine speed Nell is defined as shown in FIG. 6 in the first embodiment, the relationship between these parameters Ni, Nell is not limited to that of the first embodiment, but may be changed when appropriate. In this case, it is desirable to define the relationship between these parameters Ni, Nell so as to satisfy the following conditions:
   (a) if the transmission speed Ni is lower than a value corresponding to the idle speed Neid, the permissible lower limit engine speed Nell is set on the basis of the value corresponding to the idle speed Neid, and
   (b) if the transmission speed Ni is equal to or higher than the idle speed Neid, the permissible lower limit engine speed Nell is set to be equal to or higher than the transmission speed Ni.
(6) While the permissible lower limit speed Nell is set to be variable depending upon the transmission speed Ni in the first embodiment, other parameters may be used in place of the transmission speed Ni.
(7) In the first embodiment, when the value obtained by subtracting the predetermined speed Neh from the permissible upper limit engine speed Neul is lower than the permissible lower limit engine speed Nell, the permissible lower limit engine speed Nell is calculated again by applying the permissible upper limit engine speed Neul to the function Fllnd. However, this arrangement may be changed, for example, in the following manner: the permissible lower limit engine speed Nell may be calculated again by applying the permissible upper limit engine speed Neul to a certain map that defines the relationship between the permissible upper limit engine speed Neul and the permissible lower limit engine speed Nell.
(8) In the first embodiment, when the value obtained by subtracting the predetermined speed Neh from the permissible upper limit engine speed Neul is lower than the permissible lower limit engine speed Nell, the permissible lower limit engine speed Nell is calculated again by applying the permissible upper limit engine speed Neul to the function Fllnd. However, this arrangement may be changed, for example, in the following manner: the engagement determination and output control process of FIG. 3 and FIG. 4, from which the above-described process of steps S205, S206 is omitted or eliminated, may be performed.
(9) In the first embodiment, when the engine speed Ne is equal to or higher than the permissible upper limit speed Neul, the fuel injection duration Tereq is calculated based on the function Fteul that defines the relationship between the engine speed Ne and the fuel injection duration Tereq. However, this arrangement may be changed, for example, in the following manner: the fuel injection duration Tereq may be calculated by applying the engine speed Ne to a certain map that defines the relationship between the engine speed Ne and the fuel injection duration Tereq.
(10) While the function Fteul is a function of the engine speed Ne in the first embodiment, other parameters may be used in place of the engine speed Ne. In short, the function Fteul may be set by using a suitable parameter provided that the parameter has a certain relationship with the output torque of the engine.
(11) In the first embodiment, when the engine speed Ne is lower than the permissible lower limit speed Nell, the fuel injection duration Tereq is calculated based on the function Ftell that defines the relationship between the engine speed Ne and the fuel injection duration Tereq. However, this arrangement may be changed, for example, in the following manner: the fuel injection duration Tereq may be calculated by applying the engine speed Ne to a certain map that defines the relationship between the engine speed Ne and the fuel injection duration Tereq.
(12) While the function Ftell is a function of the engine speed Ne in the first embodiment, other parameters may be used in place of the engine speed Ne. In short, the function Ftell may be set by using a suitable parameter provided that the parameter has a certain relationship with the output torque of the engine.
(13) In the first embodiment, when the engine speed Ne is lower than the permissible upper limit speed Neul and is equal to or higher than the permissible lower limit speed Nell, the fuel injection duration Tereq is calculated based on the function Ftenrm that defines the relationship between the accelerator operation amount Accl and the fuel injection duration Tereq. However, this arrangement may be modified, for example, in the following manner: the fuel injection duration Tereq may be calculated by applying the accelerator operation amount Accl to a certain map that defines the relationship between the accelerator operation amount Accl and the fuel injection duration Tereq.

### Second Embodiment

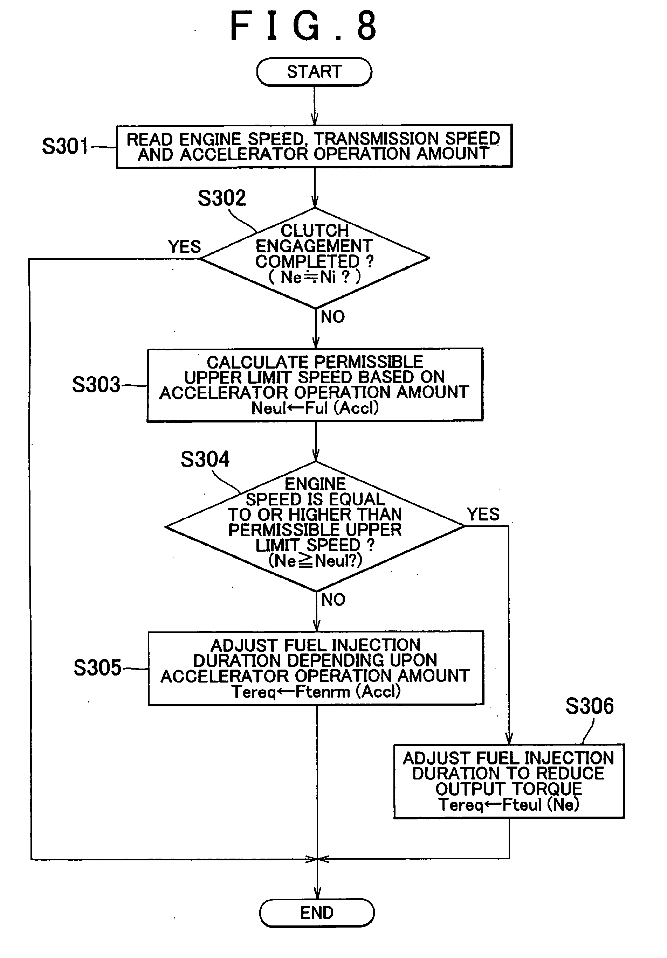

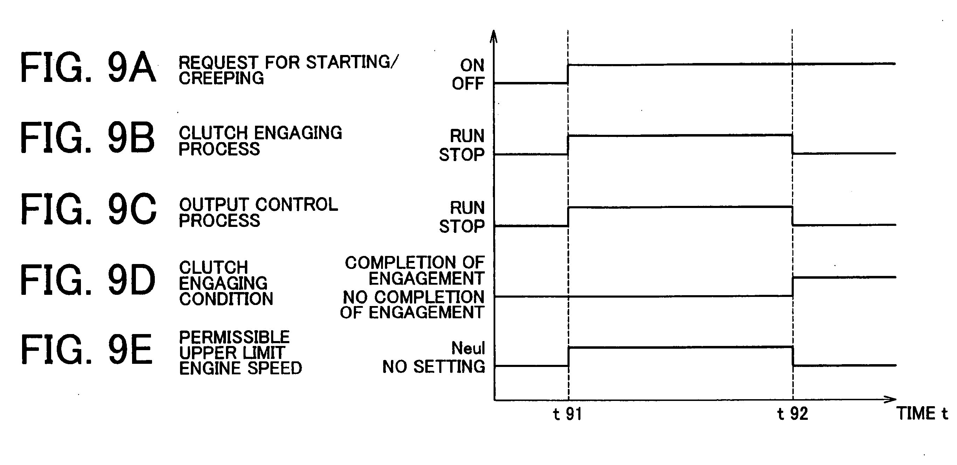

An output control apparatus of an internal combustion engine according to the second embodiment of the invention will be described with reference to FIG. 8 and FIG. 9. The construction of a system that employs the output control apparatus of the second embodiment is similar to that of the first embodiment, and therefore explanation of the system will not be provided herein.

In the second embodiment, the permissible upper limit engine speed is set in accordance with the operation amount of the accelerator pedal, and the output torque of the engine is controlled so that the engine speed is kept lower than the permissible upper limit speed over a period up to completion of engagement of the clutch by the clutch control device.

Namely, the output control apparatus of the second embodiment is arranged to perform the engagement determination and output control process of FIG. 3 and FIG. 4 from which a process of setting the permissible lower limit engine speed is omitted or eliminated. With this arrangement, protection of the clutch can be achieved by a relatively simple process.

Referring to FIG. 8, an engagement determination and output control process according to the second embodiment will be described. This process is repeatedly executed at certain time intervals. The process of FIG. 8 includes a process of steps S301 and S302 corresponding to the engagement determination process, and a process of steps S303 - S306 corresponding to the output control process. The output control process is equivalent to a process executed by the output control means.

The engagement determination and output control process of FIG. 8 is started when conditions that (a) the vehicle 1 is in an idling state, and (b) the driver makes a request to drive the vehicle 1 through a starting operation or a creeping operation are satisfied in a process similar to the request determination process (FIG. 2) of the first embodiment.

In the process as shown in FIG. 8, the engine speed Ne, transmission speed Ni and the accelerator operation amount Accl are initially read in step S301.

It is then determined in step S302 whether engagement of the clutch 13 is completed. The completion of engagement of the clutch 13 may be determined by, for example, determining whether the crankshaft 1a and the input shaft 12a of the transmission 12 are in a state of synchronous rotation. Namely, when a condition that Ne ≈ Ni is satisfied, the ECU 3 determines that engagement of the clutch 13 is completed.

If it is determined in step S302 that engagement of the clutch 13 has not been completed, the output control process as described below is carried out. If it is determined that engagement of the clutch 13 is completed, on the other hand, the process of FIG. 8 is once finished. Namely, in the present embodiment, the output control process is performed over a period from a start of engagement of the clutch 13 to completion of the engagement.

If it is determined that engagement of the clutch 13 has not been completed, step S303 is executed to calculate the permissible upper limit engine speed Neul set as the upper limit value of the speed of revolution of the engine 11, by applying the accelerator operation amount Accl read in step S301 to the map as shown in FIG. 5.

In the next step S304, it is determined whether the engine speed Ne is equal to or higher than the permissible upper limit speed Neul. Namely, it is determined whether a condition that Ne ≥ Neul is satisfied.

If the engine speed Ne is equal to or higher than the permissible upper limit speed Neul, the output torque of the engine 11 is reduced so that the engine speed Ne becomes lower than the permissible upper limit speed Neul. Namely, in step S306, the fuel injection duration Tereq of the injector INJ is adjusted so as to provide output torque that makes the engine speed Ne lower than the permissible upper limit speed Neul.

In this case, the fuel injection duration Tereq is calculated, based on a certain function Fteul that defines the relationship between the engine speed Ne and the fuel injection duration Tereq and is used when the output torque of the engine 11 is to be reduced. Namely, the fuel injection duration Tereq is calculated through an operation as expressed as Tereq ← Fteul (Ne).

If the engine speed Ne is lower than the permissible upper limit speed Neul, on the other hand, the fuel injection duration Tereq of the injector INJ is adjusted so that the output torque of the engine 11 varies depending upon the accelerator operation amount Accl in step S305.

In this case, the fuel injection duration Tereq is calculated based on a certain function Ftenrm that defines the relationship between the accelerator operation amount Accl and the fuel injection duration Tereq. Namely, the fuel injection duration Tereq is calculated through an operation as expressed as Tereq ← Ftenrm(Accl).

With the process as described above, the output torque of the engine 11 is controlled over the period up to completion of engagement of the clutch 13, so that the speed of revolution of the engine 11 is kept lower than the permissible upper limit speed Neul set based on the accelerator operation amount Accl. Thus, the clutch 13 is protected against wear or damage when the clutch is engaged by the clutch control device.

Referring next to FIG. 9, one example of an engagement pattern of the clutch according to the above-described processes (of FIG. 2 and FIG. 8) will be explained.

If a request to drive the vehicle 1 through a starting operation or a creeping operation is detected at time t91, based on an operation of the accelerator pedal AC by the driver, for example, the clutch engaging process and the engagement determination and output control process are started as shown in FIG. 9A to FIG. 9C. With the output control process thus started, the permissible upper limit engine speed Neul is set, and the output torque of the engine 11 is controlled based on a result of comparison between the engine speed Ne and the permissible upper limit speed Neul.

When completion of engagement of the clutch 13 is detected at time 92, the clutch engaging process and the engagement determination and output control process are stopped, and setting of the permissible upper limit engine speed Neul is cancelled, as shown in FIG. 9B through FIG. 9E.

The output control apparatus of the internal combustion engine according to the second embodiment as described above provides advantageous effects as follows.
(1) In the present embodiment, while the clutch 13 is being engaged through an operation of the clutch actuator 13a, the output torque of the engine 11 is controlled so that the engine speed Ne is kept lower than the permissible upper limit speed Neul. Thus, protection of the clutch 13 is ensured.
(2) In the present embodiment, the permissible upper limit engine speed Neul is set to be variable depending upon the accelerator operation amount Accl. It is thus possible to ensure protection of the clutch 13 while suitably satisfying the output request from the driver.
(3) In the present embodiment, the relationship between the parameters (Accl, Neul) is defined so that the permissible upper limit engine speed Neul has a larger value as the accelerator operation amount Accl increases. Thus, since the engine speed Ne is kept lower than a value that varies with the accelerator operation amount Accl, deviation of the behavior of the vehicle 1 from that required by the operation of the accelerator pedal AC by the driver can be favorably reduced or eliminated.

The second embodiment as described above may be changed or modified when appropriate to provide the following modified examples, which are merely exemplary.
(1) While the permissible upper limit engine speed Neul is calculated by applying the accelerator operation amount Accl to the map as shown in FIG. 5 in the second embodiment, the permissible upper limit speed Neul may be calculated by other methods. For example, the permissible upper limit engine speed Neul may be calculated by applying the accelerator operation amount Accl to a certain function that defines the relationship between the accelerator operation amount Accl and the permissible upper limit engine speed Neul. In this case, the function may be determined so that calculation results obtained from the function indicate a relationship similar or equivalent to the relationship between the accelerator operation amount Accl and the permissible upper limit engine speed Neul as defined in, for example, the map of FIG. 5.
(2) Although the relationship between the accelerator operation amount Accl and the permissible upper limit speed Neul is defined as shown in FIG. 5 in the second embodiment, the relationship between these parameters is not limited to that of the second embodiment, but may be changed when appropriate. In short, the relationship between the parameters Accl and Neul may be changed provided that the permissible upper limit engine speed Neul has a larger value as the accelerator operation amount Accl increases.
(3) While the permissible upper limit engine speed Neul is set to be variable depending upon the accelerator operation amount Accl in the second embodiment, other parameters may be used in place of the accelerator operation amount Accl.
(4) In the second embodiment, when the engine speed Ne is equal to or higher than the permissible upper limit speed Neul, the fuel injection duration Tereq is calculated based on the function Fteul that defines the relationship between the engine speed Ne and the fuel injection duration Tereq. However, this arrangement may be changed, for example, in the following manner: the fuel injection duration Tereq may be calculated by applying the engine speed Ne to a certain map that defines the relationship between the engine speed Ne and the fuel injection duration Tereq.
(5) While the function Fteul is a function of the engine speed Ne in the second embodiment, other parameters may be used in place of the engine speed Ne. In short, the function Fteul may be set by using a suitable parameter provided that the parameter has a certain relationship with the output torque of the engine.
(6) In the second embodiment, when the engine speed Ne is lower than the permissible upper limit speed Neul, the fuel injection duration Tereq is calculated based on the function Ftenrm that defines the relationship between the accelerator operation amount Accl and the fuel injection duration Tereq. However, this arrangement may be modified, for example, in the following manner: the fuel injection duration Tereq may be calculated by applying the accelerator operation amount Accl to a certain map that defines the relationship between the accelerator operation amount Accl and the fuel injection duration Tereq.

### Third Embodiment

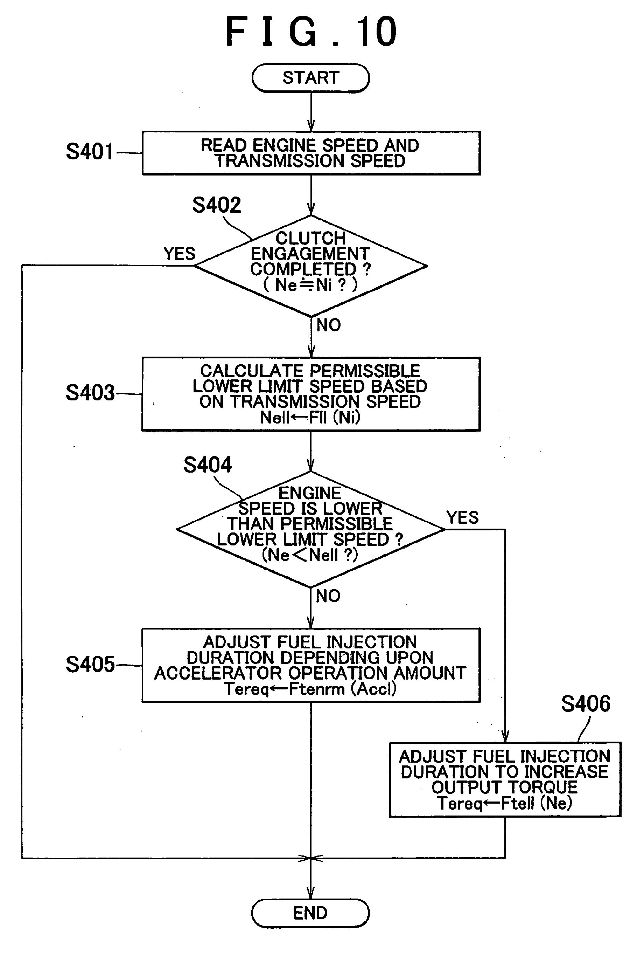

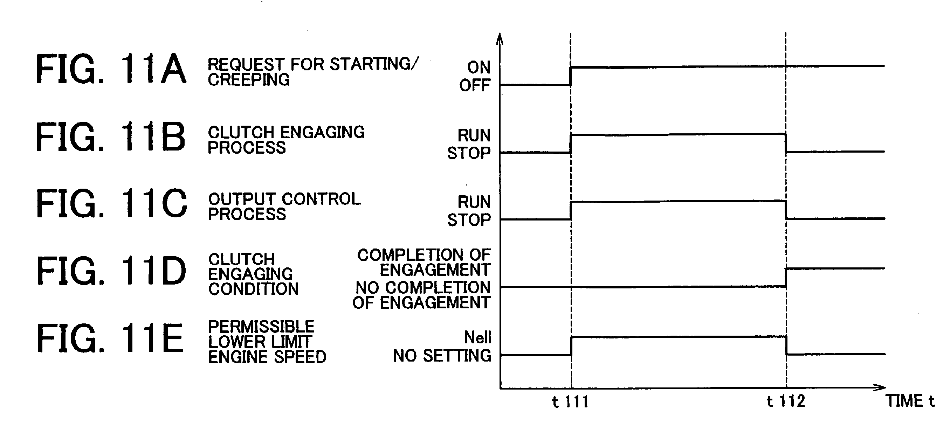

An output control apparatus of an internal combustion engine according to the third embodiment of the invention will be described with reference to FIG. 10 and FIG. 11. The construction of a system that employs the output control apparatus of the third embodiment is similar to that of the first embodiment, and therefore explanation of the system will not be provided herein.

In the third embodiment, the permissible lower limit engine speed is set in accordance with the speed of rotation of the transmission 12, and the output torque of the engine is controlled so that the engine speed is kept equal to or higher than the permissible lower limit speed, over a period up to completion of engagement of the clutch by the clutch control device,

Namely, the output control apparatus of the third embodiment is arranged to perform the engagement determination and output control process of FIG. 3 and FIG. 4 from which a process of setting the permissible upper limit engine speed is omitted or eliminated. With this arrangement, stalling of the engine can be properly avoided by a relatively simple process.

Referring to FIG. 10, an engagement determination and output control process according to the third embodiment will be described. This process is repeatedly executed at certain time intervals. The process of FIG. 10 includes a process of steps S401 and S402 corresponding to the engagement determination process, and a process of steps S403 - S406 corresponding to the output control process. The output control process is equivalent to a process executed by the output control means.

The engagement determination and output control process of FIG. 10 is started when conditions that (a) the vehicle 1 is in an idling state, and (b) the driver makes a request to drive the vehicle 1 through a starting operation or a creeping operation are satisfied in a process similar to the request determination process (FIG. 2) of the first embodiment. This process is repeatedly executed at certain time intervals.

In the process as shown in FIG. 10, the engine speed Ne and the transmission speed Ni are initially read in step S401.

It is then determined in step S402 whether engagement of the clutch 13 is completed. The completion of engagement of the clutch 13 may be determined by, for example, determining whether the crankshaft 11a and the input shaft 12a of the transmission 12 are in a state of synchronous rotation. Namely, it is determined that engagement of the clutch 13 is completed if a condition that Ne ≈ Ni is satisfied.

If it is determined in the above engagement determination process that engagement of the clutch 13 has not been completed, the output control process as described below is performed. If it is determined that engagement of the clutch 13 is completed, on the other hand, the process of FIG. 10 is once finished. Namely, in the third embodiment, the output control process is performed over a period from a start of engagement of the clutch 13 to completion of the engagement.

If it is determined in step S402 that engagement of the clutch 13 has not been completed, the permissible lower limit engine speed Nell to be set as the lower limit value of the speed of revolution of the engine 11 is calculated in step S403 by applying the transmission speed Ni read in step S401 to the map as shown in FIG. 6.

In the following step S404, it is determined whether the engine speed Ne is lower than the permissible lower limit speed Nell. Namely, it is determined whether a condition that Ne < Nell is satisfied.

If the engine speed Ne is lower than the permissible lower limit speed Nell, the output torque of the engine 11 is increased so that the engine speed Ne becomes equal to or higher than the permissible lower limit speed Nell. Namely, in step S406, the fuel injection duration Tereq of the injector INJ is adjusted so that the engine speed Ne becomes equal to or higher than the permissible lower limit speed Nell.

In this case, the fuel injection duration Tereq is calculated based on a certain function Ftell that defines the relationship between the engine speed Ne and the fuel injection duration Tereq and is used when the output torque of the engine 11 is to be increased. Namely, the fuel injection duration Tereq is calculated through an operation as expressed as Tereq ← Ftell (Ne).

If the engine speed Ne is equal to or higher than the permissible lower limit speed Nell, on the other hand, the fuel injection duration Tereq of the injector INJ is adjusted in step S405 so that the output torque of the engine 11 varies depending upon the accelerator operation amount Accl.

In this case, the fuel injection duration Tereq is calculated based on a certain function Ftenrm that defines the relationship between the accelerator operation amount Accl and the fuel injection duration Tereq. Namely, the fuel injection duration Tereq is calculated through an operation as expressed as Tereq ← Ftenrm (Accl).

According to the process as described above, the output torque of the engine 11 is controlled over a period up to completion of engagement of the clutch 13, so that the speed of revolution of the engine 11 is kept equal to or higher than the permissible lower limit speed Nell set based on the transmission speed Ni.

With the above arrangement, stalling of the engine is avoided when the clutch is engaged by means of the clutch control device.

Referring next to FIG. 11, one example of an engagement pattern of the clutch according to the above-described processes (of FIG. 2 and FIG. 10) will be explained.

If a request to drive the vehicle 1 through a starting operation or a creeping operation is detected at time t111, based on an operation of the accelerator pedal AC by the driver, for example, the clutch engaging process and the engagement determination and output control process are started as shown in FIG. 11A to FIG. 11C. With the output control process thus started, the permissible lower limit engine speed Nell is set, and the output torque of the engine 11 is controlled based on a result of comparison between the engine speed Ne and the permissible lower limit speed Nell.

When completion of engagement of the clutch 13 is detected at time t112, the clutch engaging process and the engagement determination and output control process are stopped, and setting of the permissible lower limit engine speed Nell is cancelled, as shown in FIG. 11B through FIG. 11E.

The output control apparatus of the internal combustion engine according to the third embodiment as described above provides advantageous effects as follows.
(1) In the present embodiment, while the clutch 13 is being engaged through an operation of the clutch actuator 13a, the output torque of the engine 11 is controlled so that the engine speed Ne is kept equal to or higher than the permissible lower limit speed Nell. Thus, stalling of the engine 11 can be appropriately avoided.
(2) In the present embodiment, the permissible lower limit engine speed Nell is set to be variable depending upon the transmission speed Ni. Thus, stalling of the engine 11 can be more appropriately avoided.

The third embodiment as described above may be changed or modified when appropriate to provide the following modified examples, which are merely exemplary.
(1) While the permissible lower limit engine speed Nell is calculated by applying the transmission speed Ni to the map as shown in FIG. 6 in the third embodiment, the permissible lower limit speed Nell may be calculated by other methods. For example, the permissible lower limit engine speed Nell may be calculated by applying the transmission speed Ni to a certain function that defines the relationship between the transmission speed Ni and the permissible lower limit speed Nell. In this case, the function may be determined so that calculation results obtained from the function indicate a relationship similar to or equivalent to the relationship between the transmission speed Ni and the permissible lower limit speed Nell as defined in, for example, the map of FIG. 6.
(2) While the relationship between the transmission speed Ni and the permissible lower limit engine speed Nell is defined as shown in FIG. 6 in the third embodiment, the relationship between these parameters Ni, Nell is not limited to that of the third embodiment, but may be changed when appropriate. In this case, it is desirable to define the relationship between these parameters Ni, Nell so as to satisfy the following conditions:
   (a) if the transmission speed Ni is lower than a value corresponding to the idle speed Neid, the permissible lower limit engine speed Nell is set on the basis of the value corresponding to the idle speed Neid, and
   (b) if the transmission speed Ni is equal to or higher than the idle speed Neid, the permissible lower limit engine speed Nell is set to be equal to or higher than the transmission speed Ni.
(3) While the permissible lower limit engine speed Nell is set to be variable depending upon the transmission speed Ni in the third embodiment, other parameters may be used in place of the transmission speed Ni.
(4) In the third embodiment, when the engine speed Ne is lower than the permissible lower limit speed Nell, the fuel injection duration Tereq is calculated based on the function Ftell that defines the relationship between the engine speed Ne and the fuel injection duration Tereq. However, this arrangement may be modified in the following manner: the fuel injection duration Tereq may be calculated by applying the engine speed Ne to a certain map that defines the relationship between the engine speed Ne and the fuel injection duration Tereq.
(5) While the function Ftell is a function of the engine speed Ne in the third embodiment, other parameters may be used in place of the engine speed Ne. In short, the function Ftell may be set by using a suitable parameter provided that the parameter has a certain relationship with the output torque of the engine.
(6) In the third embodiment, when the engine speed Ne is equal to or higher than the permissible lower limit speed Nell, the fuel injection duration Tereq is calculated based on the function Ftenrm that defines the relationship between the accelerator operation amount Accl and the fuel injection duration Tereq. However, this arrangement may be modified, for example, in the following manner: the fuel injection duration Tereq may be calculated by applying the accelerator operation amount Accl to a certain map that defines the relationship between the accelerator operation amount Accl and the fuel injection duration Tereq.

### Fourth Embodiment

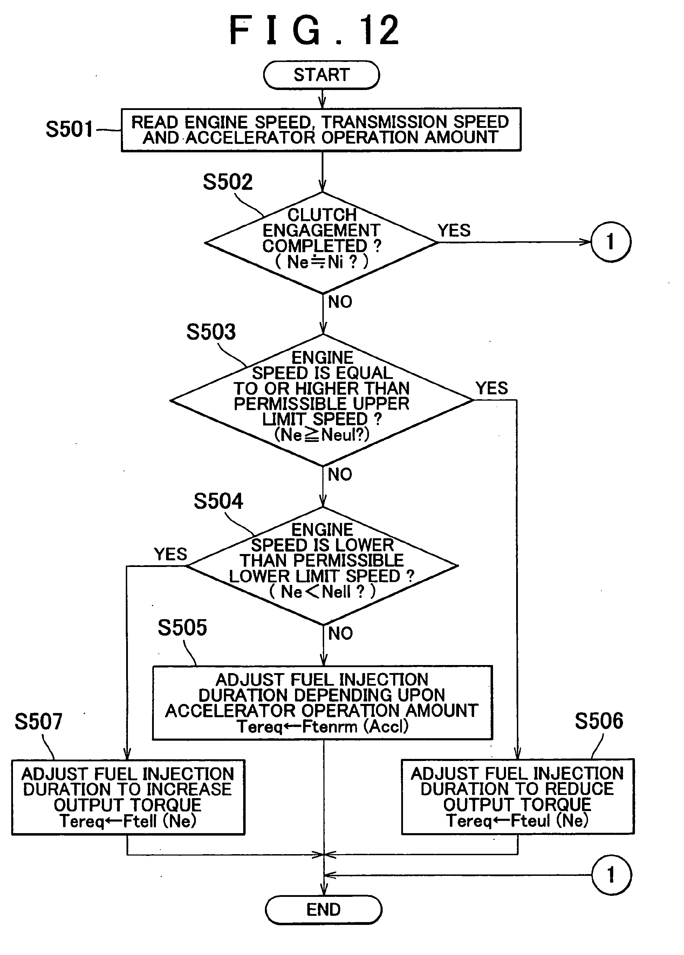

An output control apparatus of an internal combustion engine according to the fourth embodiment of the invention will be described with reference to FIG. 12. The construction of a system that employs the output control apparatus of the fourth embodiment is similar to that of the first embodiment, and therefore explanation of the system will not be provided herein.

In the fourth embodiment, the output torque of the engine is controlled over a period up to completion of engagement of the clutch by the clutch control device, so that the engine speed is kept lower than a pre-set permissible upper limit speed, and is kept equal to or higher than a pre-set permissible lower limit speed.

Namely, the output control apparatus of the fourth embodiment is arranged to perform the engagement determination and output control process (FIG. 3 and FIG. 4) of the first embodiment by using the permissible upper limit engine speed and permissible lower limit engine speed that are set in advance. With this arrangement, protection of the clutch and prevention of stalling of the engine can be achieved by a relatively simple process.

Referring to FIG. 12, an engagement determination and output control process according to the fourth embodiment will be described. This process is repeatedly executed at certain time intervals. The process of FIG. 12 includes a process of steps S501 and S502 corresponding to the engagement determination process, and a process of steps S503 - S507 corresponding to the output control process. The output control process corresponds to a process executed by the output control means.

The engagement determination and output control process of FIG. 12 is started when conditions that (a) the vehicle 1 is in an idling state, and (b) the driver makes a request to drive the vehicle 1 through a starting operation or a creeping operation are satisfied in a process similar to the request determination process (FIG. 2) of the first embodiment. This process is repeatedly executed at certain time intervals.

In the process as shown in FIG. 12, the engine speed Ne, transmission speed Ni and the accelerator operation amount Accl are initially read in step S501.

It is then determined in step S502 whether engagement of the clutch 13 is completed. The completion of engagement of the clutch 13 may be determined by, for example, determining whether the crankshaft 11a and the input shaft 12a of the transmission 12 are in a state of synchronous rotation. Namely, it can be determined that engagement of the clutch 13 is completed if a condition that Ne ≈ Ni is satisfied.

If it is determined through the above-described engagement determination process that engagement of the clutch 13 has not been completed, the output control process as described below is carried out. If it is determined that engagement of the clutch 13 is completed, the process of FIG. 12 is once finished. Namely, in the present embodiment, the output control process is performed over a period of time from a start of engagement of the clutch 13 to completion of the engagement.

If it is determined in step S502 that engagement of the clutch 13 has not been completed, it is determined in step S503 whether the engine speed Ne is equal to or higher than the permissible upper limit speed Neul that is set in advance as a predetermined value. Namely, in step S503, it is determined whether a condition that Ne ≥ Neul is satisfied. The permissible upper limit engine speed Neul is set in view of the durability of the clutch. Thus, the clutch 13 is protected against wear or damage if the engine speed Ne is kept lower than the permissible upper limit speed Neul.

If the engine speed Ne is equal to or higher than the permissible upper limit speed Neul, the output torque of the engine 11 is reduced so that the engine speed Ne becomes lower than the permissible upper limit speed Neul. Namely, in step S506, the fuel injection duration Tereq of the injector INJ is adjusted so as to provide output torque that makes the engine speed Ne lower than the permissible upper limit speed Neul.

In this case, the fuel injection duration Tereq is calculated, based on a certain function Fteul that defines the relationship between the engine speed Ne and the fuel injection duration Tereq and is used when the output torque of the engine 11 is to be reduced. Namely, the fuel injection duration Tereq is calculated through an operation as expressed as Tereq ← Fteul (Ne).

If the engine speed Ne is lower than the permissible upper limit speed Neul, on the other hand, it is determined in step S504 whether the engine speed Ne is lower than the permissible lower limit speed Nell that is set in advance as a predetermined value. Namely, in step S504, it is determined whether a condition that Ne < Nell is satisfied. The permissible lower limit engine speed Nell is set in view of the possibility of stalling of the engine. Thus, stalling of the engine is favorably avoided if the engine speed Ne is kept equal to or higher than the permissible lower limit speed Nell.

If the engine speed Ne is lower than the permissible lower limit speed Nell, the output torque of the engine 11 is increased so that the engine speed Ne becomes equal to or higher than the permissible lower limit sped Nell. Namely, in step S507, the fuel injection duration Tereq of the injector INJ is adjusted so as to provide output torque that makes the engine speed Ne equal to or higher than the permissible lower limit speed Nell.

In this case, the fuel injection duration Tereq is calculated based on a certain function Ftell that defines the relationship between the engine speed Ne and the fuel injection duration Tereq and is used when the output torque of the engine 11 is to be increased. Namely, the fuel injection duration Tereq is calculated through an operation as expressed as Tereq ← Ftell (Ne).

If the engine speed Ne is equal to or higher than the permissible lower limit speed Nell, on the other hand, the fuel injection duration Tereq of the injector INJ is adjusted in step S505 so that the output torque of the engine 11 varies depending upon the accelerator operation amount Accl.

In this case, the fuel injection duration Tereq is calculated based on a certain function Ftenrm that defines the relationship between the accelerator operation amount Accl and the fuel injection duration Tereq. Namely, the fuel injection duration Tereq is calculated through an operation as expressed as Tereq ← Ftenrm (Accl).

According to the process as described above, the output torque of the engine 11 is controlled so that the speed of revolution of the engine 11 is kept lower than the pre-set permissible upper limit speed Neul, and is kept equal to or higher than the pre-set permissible lower limit speed Nell. With this arrangement, protection of the clutch 13 and prevention of stalling of the engine 11 are favorably ensured when the clutch is engaged by means of the clutch control device.

The output control apparatus of the internal combustion engine according to the fourth embodiment as described above provides advantageous effects as follows.
(1) In the present embodiment, while the clutch 13 is being engaged through an operation of the clutch actuator 13a, the output torque of the engine 11 is adjusted so that the engine speed Ne is kept lower than the permissible upper limit speed Neul, and is kept equal to or higher than the permissible lower limit speed Nell. It is thus possible to protect the clutch 13 against wear and damage and avoid or suppress stalling of the engine 11.

The fourth embodiment as described above may be changed or modified when appropriate to provide the following modified examples, which are merely exemplary.
(1) In the fourth embodiment, when the engine speed Ne is equal to or higher than the permissible upper limit speed Neul, the fuel injection duration Tereq is calculated based on the function Fteul that defines the relationship between the engine speed Ne and the fuel injection duration Tereq. However, this arrangement may be changed, for example, in the following manner: the fuel injection duration Tereq may be calculated by applying the engine speed Ne to a certain map that defines the relationship between the engine speed Ne and the fuel injection duration Tereq.
(2) While the function Fteul is a function of the engine speed Ne in the fourth embodiment, other parameters may be used in place of the engine speed Ne. In short, the function Fteul may be set by using a suitable parameter provided that the parameter has a certain relationship with the output torque of the engine.
(3) In the fourth embodiment, when the engine speed Ne is lower than the permissible lower limit speed Nell, the fuel injection duration Tereq is calculated based on the function Ftell that defines the relationship between the engine speed Ne and the fuel injection duration Tereq. However, this arrangement may be changed, for example, in the following manner: the fuel injection duration Tereq may be calculated by applying the engine speed Ne to a certain map that defines the relationship between the engine speed Ne and the fuel injection duration Tereq.
(4) While the function Ftell is a function of the engine speed Ne in the fourth embodiment, other parameters may be used in place of the engine speed Ne. In short, the function Ftell may be set by using a suitable parameter provided that the parameter has a certain relationship with the output torque of the engine.
(5) In the fourth embodiment, when the engine speed Ne is lower than the permissible upper limit speed Neul and is equal to or higher than the permissible lower limit speed Nell, the fuel injection duration Tereq is calculated based on the function Ftenrm that defines the relationship between the accelerator operation amount Accl and the fuel injection duration Tereq. However, this arrangement may be modified, for example, in the following manner: the fuel injection duration Tereq may be calculated by applying the accelerator operation amount Accl to a certain map that defines the relationship between the accelerator operation amount Accl and the fuel injection duration Tereq.

### Other Modified Examples

Each of the first through fourth embodiments of the invention as described above may be modified, for example, in the following manners.

While a request from the driver is determined through the request determination process of FIG. 2 in each of the illustrated embodiments, the request determination process is not limited to that of the illustrated embodiments, but may be modified when appropriate. In short, any suitable request determination process may be employed provided that the process permits appropriate determination of a request of the driver based on an operation of the accelerator pedal, an operation of the brake pedal, and the like.

While the engagement determination and output control process (of FIG. 3 and FIG. 4) is performed as a single process that is a combination of the engagement determination process and the output control process in each of the illustrated embodiments, the engagement determination process and the output control process may be performed exclusively or separately from each other.

In each of the illustrated embodiments, the output control process is carried out over a period (clutch engagement period) that extends from a start of engagement of the clutch to completion of the engagement. However, this arrangement may be modified, for example, in the following manner: the output control process may be carried out over a certain period that is shorter than the clutch engagement period. Also, if desirable behavior of the vehicle can be provided, the output control process may be carried out over a certain period that is longer than the clutch engagement period.

With regard to the timing of a start and a finish of the output control process, the output control process may be started at a point of time different from the time of a start of clutch engagement, and/or may be finished at a point of time different from the time of completion of clutch engagement.

It is also possible to suitably combine two or more of the above-described modified examples, so that the output control process is carried out over at least a part of the period that extends from a start of engagement of the clutch to completion of the clutch engagement. In short, the duration of the output control process according to the invention is not limited to that of the illustrated embodiments, but may be changed provided that the output control process is performed over a predetermined period during engagement of the clutch.

In each of the illustrated embodiments, the output control process is performed over the period (i.e., clutch engagement period) that extends from a start of engagement of the clutch to completion of the engagement. However, this arrangement may be modified, for example, in the following manner: the output control process may be performed over a certain period of time that extends from detection of a request for starting or creeping of the vehicle to an end of driving of the vehicle in a mode (starting or creeping mode) that conforms to the detected request. In this connection, it can be determined that the starting operation or creeping operation of the vehicle is competed if each of the following conditions that (a) the crankshaft and the input shaft of the transmission are in a state of synchronous rotation and (b) the accelerator operation amount is equal to or larger than a predetermined operation amount that is set depending upon the operating conditions of the engine, is satisfied.

If the modification as described just above is employed, further modifications as described below may be added. For example, the output control process may be performed over a certain period that is shorter than the period of the starting operation (or starting period) or the period of the creeping operation (or creeping period). If desirable behavior of the vehicle can be provided, the output control process may be performed over a certain period that is longer than the starting period or the creeping period.

Also, the timing of a start and a finish of the output control process may be changed such that the output control process is started at a point of time different from the time of a start of the starting operation or the creeping operation, and/or is finished at a point of time different from the time of completion of the starting operation or the creeping operation.

It is also possible to combine two or more of the above-described modified examples so that the output control process is performed over at least a part of the period that extends from a start of the starting operation or creeping operation to completion of the same operation. In short, the duration of the output control process according to the invention is not limited to those as illustrated above, but may be changed provided that the output control process is performed over a predetermined period during the starting operation or creeping operation of the vehicle.

While the output torque of the engine is controlled with respect to the case where the vehicle shifts from an idling state to a starting or creeping operation in each of the illustrated embodiments, the control of the output torque may be effected with respect to the case where the transmission is shifted from one gear stage (or speed) to another in response to an operation of the shift lever. Namely, when the clutch that has been temporarily released is engaged in response to an operation of the shift lever, the output torque of the engine may be controlled in a manner similar to that of each of the illustrated embodiments, until the engagement of the clutch is completed.

While the output control apparatus of each of the illustrated embodiment is employed in the internal combustion engine of the type in which the magnitude of the output torque is controlled through adjustment of the fuel injection duration of the injector, the invention is not limitedly applied to this type of engine, but may be applied to any other type of engine. In the case where the invention is applied to an internal combustion engine of a type in which the magnitude of output torque is controlled through adjustment of the opening angle of the throttle valve, for example, the output torque of the engine may be controlled in a manner similar to that of each of the illustrated embodiments, through adjustment of the opening angle of the throttle valve instead of adjustment of the fuel injection duration.

While the invention is embodied in the system as shown in FIG. 1 in each of the illustrated embodiments, the construction of the system to which the invention is applicable is not limited to that of FIG. 1, but may be changed when appropriate. In short, the invention is applicable to any system including an internal combustion engine in a vehicle equipped with a clutch control device for engaging a clutch through an operation of an actuator. In this case, too, advantageous effects similar to those of the illustrated embodiments are provided.

### Fifth Embodiment

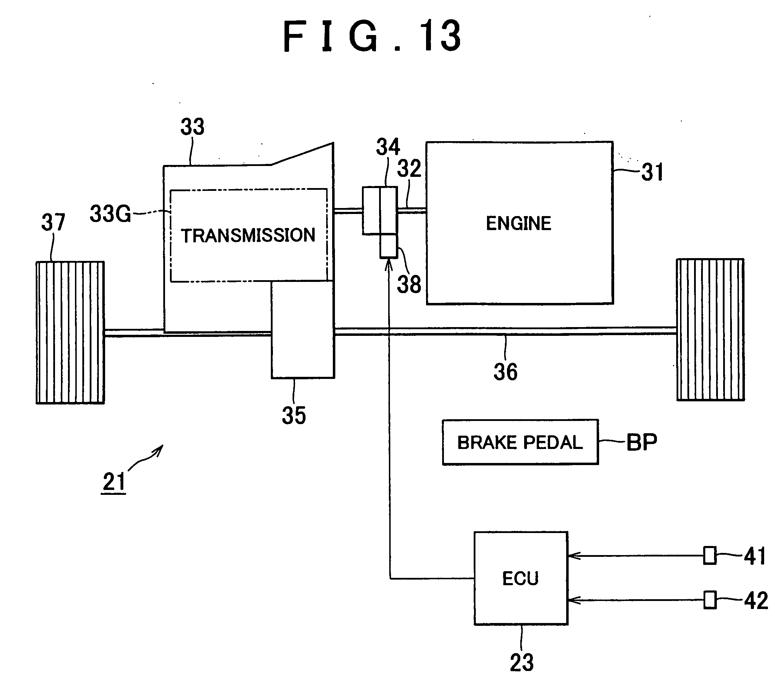

Referring to FIG. 13 through FIG. 16, the fifth embodiment of the invention in the form of a clutch control device will be described in detail.

Initially, the construction of a system including the clutch control device of the fifth embodiment will be described with reference to FIG. 13. In a vehicle 21, rotation or rotary power is transmitted from a crankshaft 32 as an output shaft of an internal combustion engine 31 to a transmission 33, via a clutch 34 that is able to connect or disconnect the crankshaft 32 to or from the transmission 33.

The transmission 33 reduces the speed of rotation received from the crankshaft 32, at a speed reduction ratio determined by the combination of gears 33G. The transmission 33 is provided with differential gears 35, to which the rotation whose speed has been reduced through the gears 33G is transmitted. The differential gears 35 are adapted to reduce the speed of the rotation received from the transmission 33, and transmit it to a drive shaft 36 so that drive wheels 37 are rotated in accordance with the rotation of the drive shaft 36.

The vehicle 21 also includes a clutch actuator 38 for operating or actuating the clutch 34. In operation, the engaging condition of the clutch 34 can be changed by means of the clutch actuator 38. More specifically, the engaging condition of the clutch 34 is changed between a fully released condition (in which no rotation is transmitted from the engine 31 to the transmission 33), and a fully engaged or coupled condition (in which the speed of revolution of the engine 31 is substantially equal to the speed of rotation transmitted to the transmission 33 via the clutch 34), depending upon the operation amount of the clutch actuator 38.

By changing the engaging condition of the clutch 34, it is possible to control the magnitude of torque (clutch torque TClnc) that can be transmitted from the engine 31 to the transmission 33 via the clutch 34. During a creeping operation and a starting operation of the vehicle 21, the engaging condition of the clutch 34 is changed so as to provide desired behavior or movements of the vehicle 21.

The vehicle 21 further includes a brake pedal BKP adapted to be operated by the driver. When the brake pedal BP is operated by an amount equal to or larger than a predetermined amount, a brake switch 41 is turned ON. Detection data from the brake switch 41 is transmitted to an electronic control unit (ECU) 23.

The ECU 23 determines a request from the driver as follows, based on the detection data from the brake switch 41.
(a) When the brake switch 41 is ON, the driver makes a request to keep the vehicle 21 stopped (or idling).
(b) When the brake switch 41 is OFF, the driver makes a request to drive the vehicle 21 through a creeping operation or a starting operation.

The ECU 23 also receives the speed of rotation of the crankshaft 32 (or engine speed Ne) detected by an engine speed sensor 42, and other information. The ECU 23 controls the clutch actuator 38 based on detection data of the engine speed sensor 42 and detection data of the brake switch 41.

In a conventional clutch control device, a final clutch operation amount by which the clutch actuator 38 operates or actuates the clutch 34 is calculated through a computing algorithm for calculating a clutch operation amount associated with a creeping operation of the vehicle, and a computing algorithm for calculating a clutch operation amount associated with a starting operation of the vehicle.

Accordingly, a complicated computing algorithm is needed for calculating the final clutch operation amount. Upon switching of the vehicle between a creeping operation and a starting operation, in particular, it is required to smoothly effect the switching between these operations while suppressing or avoiding shocks of the vehicle, and therefore the process of calculating the clutch operation amount becomes further complicated.

In the present embodiment, a clutch operation process as described below is performed so as to solve the above problem.

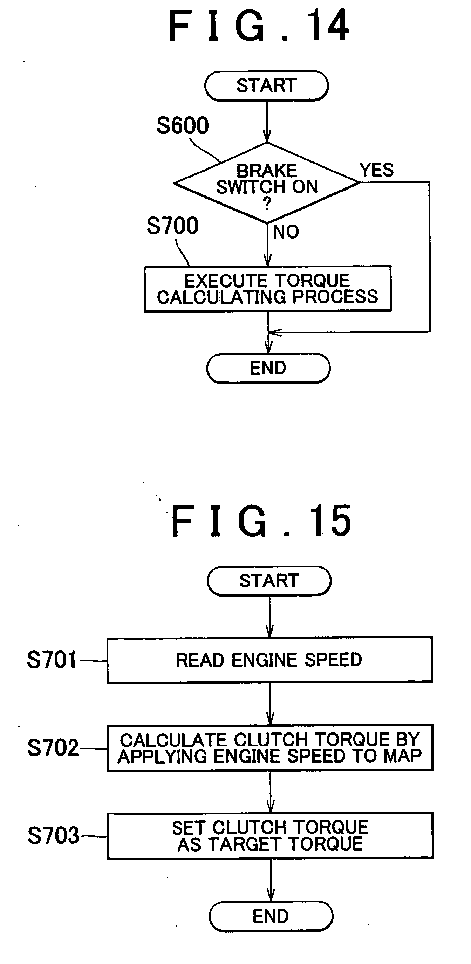

Referring next to FIG. 14 to FIG. 16, the clutch operation process will be described. This process consists of a request determining process (FIG. 14) for determining a request of the driver, and a torque calculating process (FIG. 15) for calculating the clutch torque.

Initially, the request determining process will be explained with reference to FIG. 14. This process is repeatedly executed at predetermined time intervals.

In the process as shown in FIG. 14, if a request to drive the vehicle 21 through a creep operation or a starting operation is detected based on detection data from the brake switch 41 (i.e., if a negative determination (NO) is made in step S600), the torque calculating process (FIG. 15) as described later is executed in step S700. If a request to keep the vehicle 1 stopped is detected, on the other hand, the process of FIG. 14 is once finished.

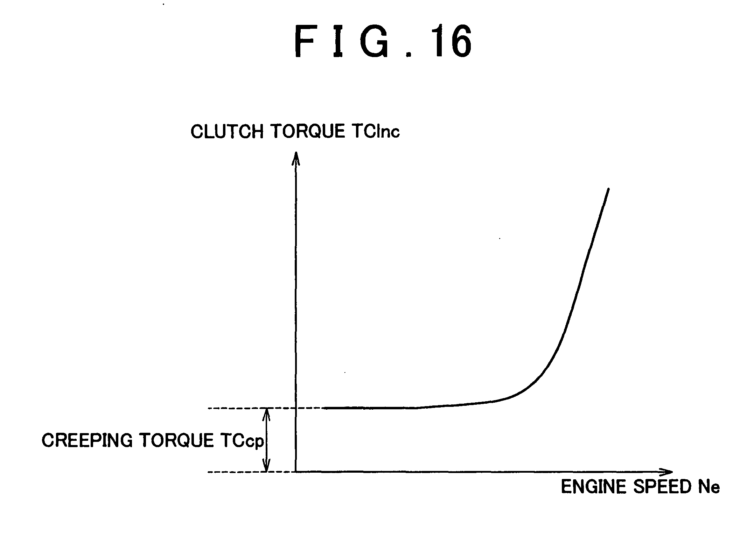

Referring next to FIG. 15 and FIG. 16, the torque calculating process will be explained. This process is also repeatedly executed at predetermined time intervals.

In the process as shown in FIG. 15, the engine speed Ne detected by the engine speed sensor 42 is initially read in step S701.

In the next step S702, clutch torque TClnc is calculated by applying the engine speed Ne read in step S701 to a map (of FIG. 16) that defines the relationship between the engine speed Ne and the clutch torque TClnc. In this embodiment, the map that defines the relationship between the engine speed Ne and the clutch torque TClnc provides torque calculating means.

Here, the relationship defined by the map of FIG. 16, namely, the relationship between the engine speed Ne and the clutch torque TClnc will be explained. In the map of FIG. 16, the relationship between parameters (Ne, TClnc) is defined such that the clutch torque TClnc shifts from torque values associated with the creeping operation of the vehicle to torque values associated with the starting operation of the vehicle, as the engine speed Ne increases from an idle speed Neid.

Here, the torque values associated with the creeping operation represent clutch torque TClnc (creeping torque TCcp) required during the creeping operation of the vehicle. In the present embodiment, the relationship between the parameters (Ne, TClnc) is defined such that the clutch torque TClnc required during the creeping operation of the vehicle has a constant value relative to the engine speed Ne.

The torque values associated with the starting operation represent clutch torque TClnc required during the starting operation of the vehicle. In the present embodiment, the relationship between the parameters (Ne, TClnc) is defined such that the clutch torque required during the starting operation exponentially increases in accordance with an increase in the engine speed Ne.

With the above arrangement, when the engine speed Ne changes in response to an operation of the accelerator pedal by the driver, the clutch torque TClnc is calculated in accordance with the change in the engine speed Ne, so that the vehicle 21 smoothly shifts from the creeping operation to the starting operation.

In the meantime, a certain map that defines the relationship between the engine speed Ne and the clutch torque TClnc required during a starting operation of the vehicle may be provided with an additional region in which the clutch torque TClnc required during a creeping operation is set in relation to the engine speed Ne, so as to provide a map equivalent to the above-described map of FIG. 16.

Subsequently, the clutch torque TClnc calculated from the above-mentioned map (FIG. 16) is set as a target torque TCtgt in step S703, and the process of FIG. 15 is once finished.

The above-mentioned target torque TCtgt is then converted into an operation amount of the clutch 34 through a process that is separately performed. The clutch actuator 38 is driven in accordance with the thus obtained operation amount of the clutch 34, so that the engaging condition of the clutch 34 is changed. As a result, torque required by the driver for achieving the desired behavior of the vehicle 21 can be transmitted from the engine 31 to the transmission 33.

According to the clutch operation process of FIG. 14 to FIG. 16 as described above, when the driver makes a request to drive the vehicle 21 through a creeping operation or a starting operation, the clutch torque TClnc is calculated based on the map that defines the clutch torque TClnc in accordance with the progression of the engine speed Ne.

With the above arrangement, the clutch torque associated with the creeping operation and the starting operation can be obtained by simply applying the engine speed to the above-described map (FIG. 16), without performing a process to clearly determine whether the required behavior of the vehicle is a creeping operation or a starting operation. Namely, the above arrangement eliminates the need to individually provide the computing algorithm for calculating the clutch torque associated with the creeping operation of the vehicle and the computing algorithm for calculating the clutch torque associated with the starting operation of the vehicle. Thus, the computing algorithm used for calculation of the clutch torque can be simplified.

Also, the map (FIG. 16) as described above defines the relationship between the parameters (Ne, TClnc) so that the clutch torque shifts from torque value(s) associated with the creeping operation to torque values associated with the starting operation, in accordance with changes in the engine speed. By using the map of FIG. 16, therefore, the vehicle can smoothly switch from the creeping operation to the starting operation.

The clutch control device of this embodiment as described above provides advantageous effects as described below.
(1) In the present embodiment, the clutch torque TClnc is calculated through a map that defines the relationship between the parameters (Ne, TClnc) such that the clutch torque TClnc shifts from torque value(s) associated with the creeping operation of the vehicle 21 to torque values associated with the starting operation of the vehicle 21 as the engine speed Ne increases. Thus, the operation amount of the clutch 34 can be calculated with a simple computing algorithm.
(2) The switching of the vehicle 21 between the creeping operation and the starting operation is smoothly carried out.
(3) In the conventional process, the final clutch operation amount is calculated based on two computing algorithms, and therefore the computing algorithm for determining the final clutch operation amount may be undesirably complicated particularly at the time of switching between the creeping operation and the starting operation. In this respect, the clutch control device of the present embodiment is adapted to calculate the clutch torque TClnc according to the predetermined relationship between the engine speed Ne and the clutch torque TClnc, and therefore complication of the computing algorithm can be avoided.
(4) In the present embodiment, the relationship between the parameters (Ne, TClnc) is defined such that the clutch torque TClnc required during the creeping operation of the vehicle 21 has a constant value relative to the engine speed Ne. Accordingly, stable behavior or movement of the vehicle 1 can be realized during the creeping operation of the vehicle 21.

The invention may be embodied in other forms, such as those as described below, by modifying the illustrated embodiment.
(a) While a request made by the driver with respect to the vehicle 21 is determined through the request determining process as shown in FIG. 14 in the illustrated embodiment, the driver's request for the vehicle 21 may be determined in other manners. For example, the operation amount of the accelerator pedal may be monitored, and the driver's request for the vehicle 21 may be determined based on the operation amount of the accelerator pedal as well as the detection data received from the brake switch 41. In short, the request determining process is not limited to that of the illustrated embodiment, but may be arranged in any way provided that a request made by the driver with respect to the vehicle 21 can be appropriately determined.
(b) While the clutch torque TClnc is calculated by applying the engine speed Ne to the map (FIG. 16) of the engine speed and the clutch torque in the illustrated embodiment, the clutch torque TClnc may be calculated in other manners. For example, the clutch torque TClnc may be calculated from a function of the engine speed Ne, in place of the above-mentioned map. In other words, the torque calculating means may be in the form of a function that produces calculation results indicating that the clutch torque TClnc shifts from torque value(s) associated with a creeping operation of the vehicle to torque values associated with a starting operation of the vehicle as the engine speed Ne increases. The calculation results of this function may be represented by, for example, the relationship between the engine speed Ne and the clutch torque TClnc as shown in the map of FIG. 16.
(c) While the clutch torque TClnc (creeping torque TCcp) associated with the creeping operation is set to be constant relative to the engine speed Ne in the relationship between the engine speed Ne and the clutch torque TClnc in the illustrated embodiment, the creeping torque TCcp may be set in other ways. For example, the relationship between the parameters (Ne, TClnc) may be defined such that the clutch torque TClnc associated with the creeping operation increases as the engine speed Ne increases. In short, the relationship between the engine speed Ne and the clutch torque TClnc is not limited to that of the illustrated embodiment, but may be modified when appropriate provided that the relationship between these parameters Ne, TClnc is defined with respect to a region corresponding to the creeping operation.
(d) While the map (FIG. 16) that defines the relationship between the engine speed Ne and the clutch torque TClnc using the idle speed Neid as a reference value is employed in the illustrated embodiment, the clutch torque TClnc may be determined with respect to the engine speed Ne that is lower than the idle speed Neid. In this case, the clutch torque TClnc may be set to a value smaller than the creeping torque TCcp, using the creeping torque TCcp as a reference value. In such a case, if the engine speed Ne decreases to be less than the idle speed Neid due to engagement of the clutch, for example, the clutch torque TClnc is changed to a lower value (a value lower than the creeping torque TCcp) depending upon the degree of decrease of the engine speed Ne, and therefore stalling of the engine can be prevented.
(e) The relationship between the engine speed Ne and the clutch torque TClnc is not limited to that of the illustrated embodiment, but may be suitably changed. Namely, the torque calculating means of the invention is not limited to that of the illustrated embodiment, but may be arranged in any other manner provided that the relationship between the engine speed and the clutch torque is defined in view of the torque values associated with the creeping operation of the vehicle and the torque values associated with the starting operation of the vehicle.
(f) The construction of the system that includes the clutch control device of the invention is not limited to that of the illustrated embodiment, but may be modified when appropriate. In short, the invention is applicable to any clutch control device adapted to change the engaging condition of a clutch by means of an actuator, assuring advantageous effects similar to those as described above.

An output control apparatus of an internal combustion engine (11) is provided in a vehicle (1) including a clutch (13) that permits and inhibits transmission of torque from the engine to a transmission (12) and an actuator (13a) for engaging the clutch when a driver's request for starting or creeping of the vehicle is detected. The apparatus controls the output torque of the engine so that the engine speed is kept lower than a permissible upper limit value and is kept equal to or higher than a permissible lower limit value over a predetermined period during engagement of the clutch. A clutch control device is also provided which determines an operation amount of the clutch based on clutch torque calculated based on the engine speed. The device includes a map that defines the relationship between the engine speed and the clutch torque, such that the clutch torque shifts from a torque region associated with a creeping operation of the vehicle to a torque region associated with a starting operation of the vehicle as the engine speed increases.

## Claims

1. An output control apparatus of an internal combustion engine (11) for controlling output torque of the engine in response to an output request from a driver, for use in a vehicle (1) including a clutch (13) that permits and inhibits transmission of torque from the engine to a transmission (12) and an actuator (13a) operable to engage the clutch when a request of the driver for starting or creeping of the vehicle is detected, **characterized in that**:
output control means (3) is provided for controlling the output torque of the engine so that the speed of revolution of the engine is kept lower than a permissible upper limit value over a predetermined period during engagement of the clutch.

2. An output control apparatus of an internal combustion engine (11) for controlling output torque of the engine in response to an output request from a driver, for use in a vehicle (1) including a clutch (13) that permits and inhibits transmission of torque from the engine to a transmission (12) and an actuator (13a) operable to engage the clutch when a request of the driver for starting or creeping of the vehicle is detected, **characterized in that**:
output control means (3) is provided for controlling the output torque of the engine so that the speed of revolution of the engine is kept equal to or higher than a permissible lower limit value over a predetermined period during engagement of the clutch.

3. An output control apparatus of an internal combustion engine (11) for controlling output torque of the engine in response to an output request from a driver, for use in a vehicle (1) including a clutch (13) that permits and inhibits transmission of torque from the engine to a transmission (12) and an actuator (13a) operable to engage the clutch when a request of the driver for starting or creeping of the vehicle is detected, **characterized in that**:
output control means (3) is provided for controlling the output torque of the engine so that the speed of revolution of the engine is kept lower than a permissible upper limit value and is kept equal to or higher than a permissible lower limit value over a predetermined period during engagement of the clutch.

4. An output control apparatus according to claim 1 or claim 3, **characterized in that** the output control means makes the permissible upper limit value variable depending upon an operation amount of an accelerator pedal (AC) provided in the vehicle.

5. An output control apparatus according to claim 2 or claim 3, **characterized in that** the output control means makes the permissible lower limit value variable depending upon the speed of rotation of the transmission.

6. An output control apparatus according to any one of claims 1-5, **characterized in that** the predetermined period over which the output control means controls the output torque of the engine extends from a start of engagement of the clutch by the actuator to completion of the engagement of the clutch.

7. An output control apparatus of an internal combustion engine (11) for controlling output torque of the engine in response to an output request from a driver, for use in a vehicle (1) including a clutch (13) that permits and inhibits transmission of torque from the engine to a transmission (12) and an actuator (13a) operable to engage the clutch when a request of the driver for starting or creeping of the vehicle is detected, **characterized in that**:
output control means (3) is provided for controlling the output torque of the engine so that the speed of revolution of the engine is kept lower than a permissible upper limit value over a predetermined period during a starting operation or a creeping operation of the vehicle.

8. An output control apparatus of an internal combustion engine (11) for controlling output torque of the engine in response to an output request from a driver, for use in a vehicle (1) including a clutch (13) that permits and inhibits transmission of torque from the engine to a transmission (12) and an actuator (13a) operable to engage the clutch when a request of the driver for starting or creeping of the vehicle is detected, **characterized in that**:
output control means (3) is provided for controlling the output torque of the engine so that the speed of revolution of the engine is kept equal to or higher than a permissible lower limit value over a predetermined period during a starting operation or a creeping operation of the vehicle.

9. An output control apparatus of an internal combustion engine (11) for controlling output torque of the engine in response to an output request from a driver, for use in a vehicle (1) including a clutch (13) that permits and inhibits transmission of torque from the engine to a transmission (12) and an actuator (13a) operable to engage the clutch when a request of the driver for starting or creeping of the vehicle is detected, **characterized in that**:
output control means (3) is provided for controlling the output torque of the engine so that the speed of revolution of the engine is kept lower than a permissible upper limit value and is kept equal to or higher than a permissible lower limit value, over a predetermined period during a starting operation or a creeping operation of the vehicle.

10. An output control apparatus according to claim 7 or claim 9, **characterized in that** the output control means makes the permissible upper limit value variable depending upon an operation amount of an accelerator pedal (AC) provided in the vehicle.

11. An output control apparatus according to claim 8 or claim 9, **characterized in that** the output control means makes the permissible lower limit value variable depending upon the speed of rotation of the transmission.

12. An output control apparatus according to any one of claims 7-11, **characterized in that** the predetermined period over which the output control means controls the output torque of the engine extends from a start of the starting operation or creeping operation of the vehicle to completion of the starting operation or creeping operation.

13. A clutch control device including torque calculating means (23) for calculating torque that can be transmitted by a clutch (34), based on the speed of revolution of an internal combustion engine (31) installed on a vehicle (21), the clutch control device being adapted to determine an operation amount of the clutch based on the torque calculated by the torque calculating means, **characterized in that**:
the torque calculating means (23) defines a relationship between the speed of revolution of the engine and the torque that can be transmitted by the clutch, in view of torque associated with a creeping operation of the vehicle and torque associated with a starting operation of the vehicle.

14. A clutch control device including torque calculating means (23) for calculating torque that can be transmitted by a clutch (34), based on the speed of revolution of an internal combustion engine (31) installed on a vehicle (21), the clutch control device being adapted to determine an operation amount of the clutch based on the torque calculated by the torque calculating means, **characterized in that**:
the torque calculating means (23) defines a relationship between the speed of revolution of the engine and the torque that can be transmitted by the clutch, such that the torque that can be transmitted by the clutch shifts from a first torque region associated with a creeping operation of the vehicle to a second torque region associated with a starting operation of the vehicle as the speed of revolution of the engine increases.

15. A clutch control device according to claim 14, wherein the torque calculating means (23) defines the relationship between the speed of revolution of the engine and the torque that can be transmitted by the clutch, such that the torque that can be transmitted by the clutch shifts from a first torque value associated with the creeping operation of the vehicle to a second torque value associated with the starting operation of the vehicle as the speed of revolution of the engine increases.

16. A clutch control device including torque calculating means (23) for calculating torque which can be transmitted by a clutch (34), and which is required during a starting operation of a vehicle (21), based on the speed of revolution of an internal combustion engine (31) installed on the vehicle, the clutch control device being adapted to determine an operation amount of the clutch based on the torque calculated by the torque calculating means, **characterized in that**:
the torque calculating means (23) defines a relationship between the torque that can be transmitted by the clutch and the speed of revolution of the engine, such that the minimum value of the torque that can be transmitted by the clutch is set based on a torque value associated with a creeping operation of the vehicle.

17. A clutch control device according to any one of claims 13-16, **characterized in that** the torque associated with the creeping operation of the vehicle is set to a constant value relative to the speed of revolution of the engine.

18. A clutch control device including torque calculating means (23) for calculating torque which can be transmitted by a clutch (34), and which is required during a starting operation of a vehicle (21), based on the speed of revolution of an internal combustion engine (31) installed on the vehicle, the clutch control device being adapted to determine an operation amount of the clutch based on the torque calculated by the torque calculating means, **characterized in that**:
the torque calculating means (23) is provided with a region in which the torque that can be transmitted by the clutch is calculated with respect to a creeping operation of the vehicle, and defines a relationship between the speed of revolution of the engine and the torque that can be transmitted by the clutch with respect to the creeping operation as well as the starting operation.

19. A clutch control device according to claim 18, **characterized in that** the torque that can be transmitted by the clutch during the creeping operation of the vehicle is set to a constant value relative to the speed of rotation of the engine.
